(19) **Europäisches Patentamt / European Patent Office / Office européen des brevets**

(11) **EP 3 949 651 B1**

(12) # EUROPEAN PATENT SPECIFICATION

(45) Date of publication and mention of the grant of the patent:
**23.08.2023 Bulletin 2023/34**

(21) Application number: **20715008.7**

(22) Date of filing: **25.03.2020**

(51) International Patent Classification (IPC):
**H04W 74/08** *(2009.01)*

(52) Cooperative Patent Classification (CPC):
**H04W 74/0833**

(86) International application number:
**PCT/EP2020/058350**

(87) International publication number:
**WO 2020/193625 (01.10.2020 Gazette 2020/40)**

(54) **UE-SELECTION OF A CONTENTION-BASED RANDOM ACCESS PROCEDURE**

BENUTZERGERÄTEAUSWAHL EINES DIREKTZUGRIFFSVERFAHRENS AUF KONFLIKTBASIS

SÉLECTION, PAR UN UE, D'UNE PROCÉDURE D'ACCÈS ALÉATOIRE EN MODE CONTENTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2019 US 201962825535 P**

(43) Date of publication of application:
**09.02.2022 Bulletin 2022/06**

(73) Proprietor: **Telefonaktiebolaget LM Ericsson (publ)**
**164 83 Stockholm (SE)**

(72) Inventors:
• **CHRISTOFFERSSON, Jan**
**975 61 Luleå (SE)**
• **REIAL, Andres**
**211 17 Malmö (SE)**
• **ENBUSKE, Henrik**
**113 41 Stockholm (SE)**

(74) Representative: **Ericsson**
**Patent Development**
**Torshamnsgatan 21-23**
**164 80 Stockholm (SE)**

(56) References cited:
**WO-A1-2018/064372**

• **ZTE ET AL: "Considerations on 2-Step RACH Procedures", 3GPP DRAFT; R1-1901627 CONSIDERATION ON 2-STEP RACH PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 16 February 2019 (2019-02-16), XP051599324, Retrieved from the Internet: URL:http://www.3gpp.org/ftp/tsg%5Fran/WG1%5FRL1/TSGR1%5F96/Docs/R1%2D1901627%2Ezip [retrieved on 2019-02-16]**
• **SAMSUNG: "Procedure for Two-step RACH", 3GPP DRAFT; R1-1902242, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 15 February 2019 (2019-02-15), XP051599937, Retrieved from the Internet: URL:http://www.3gpp.org/ftp/tsg%5Fran/WG1%5FRL1/TSGR1%5F96/Docs/R1%2D1902242%2Ezip [retrieved on 2019-02-15]**

- QUALCOMM INCORPORATED: "Procedures for Two-Step RACH", 3GPP DRAFT; R1-1903321 PROCEDURES FOR TWO-STEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 22 February 2019 (2019-02-22), XP051600996, Retrieved from the Internet: URL:http://www.3gpp.org/ftp/tsg%5Fran/WG1% 5FRL1/TSGR1%5F96/Docs/R1%2D1903321%2Ez ip [retrieved on 2019-02-22]
- ERICSSON: "2-step Random Access for NR-U", 3GPP DRAFT; R2-1901752 - TWO STEP RA FOR NR-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 15 February 2019 (2019-02-15), XP051603102, Retrieved from the Internet: URL:http://www.3gpp.org/ftp/tsg%5Fran/WG2% 5FRL2/TSGR2%5F105/Docs/R2%2D1901752%2E zip [retrieved on 2019-02-15]

**Description**

**TECHNICAL FIELD**

Embodiments of the present disclosure generally relate to wireless communication networks, and particularly relates to improvements to random access procedures in wireless communication networks.

**BACKGROUND**

Long Term Evolution (LTE) is an umbrella term for so-called fourth-generation (4G) radio access technologies developed within the Third-Generation Partnership Project (3GPP) and initially standardized in Releases 8 and 9, also known as Evolved UTRAN (E-UTRAN). LTE is targeted at various licensed frequency bands, including the 700-MHz band in the United States. LTE is accompanied by improvements to non-radio aspects commonly referred to as System Architecture Evolution (SAE), which includes Evolved Packet Core (EPC) network. LTE continues to evolve through subsequent releases.

A feature added in LTE Rel-10 (Rel-10) is support for bandwidths larger than 20 MHz, while remaining backward compatible with Rel-8. As such, a wideband (e.g., >20MHz) LTE Rel-10 carrier should appear as a number of component carriers (CCs) to an LTE Rel-8 terminal. For an efficient use of a wideband Rel-10 carrier, legacy (e.g., Rel-8) terminals can be scheduled in all parts of the wideband LTE Rel-10 carrier. One way to achieve this is by means of Carrier Aggregation (CA), whereby an LTE Rel-10 UE can receive multiple CCs, each preferably having the same structure as a Rel-8 carrier.

Each of the CCs allocated to a UE also corresponds to a cell. In particular, the UE is assigned a primary serving cell (PCell) as the "main" cell serving the UE. Both data and control signaling can be transmitted over the PCell, which is always activated. In addition, the UE can be assigned one or more supplementary or secondary serving cells (SCells) that are typically used for transmitting data only. For example, the Scell(s) can provide extra bandwidth to enable greater data throughput, and can be activated or deactivated dynamically.

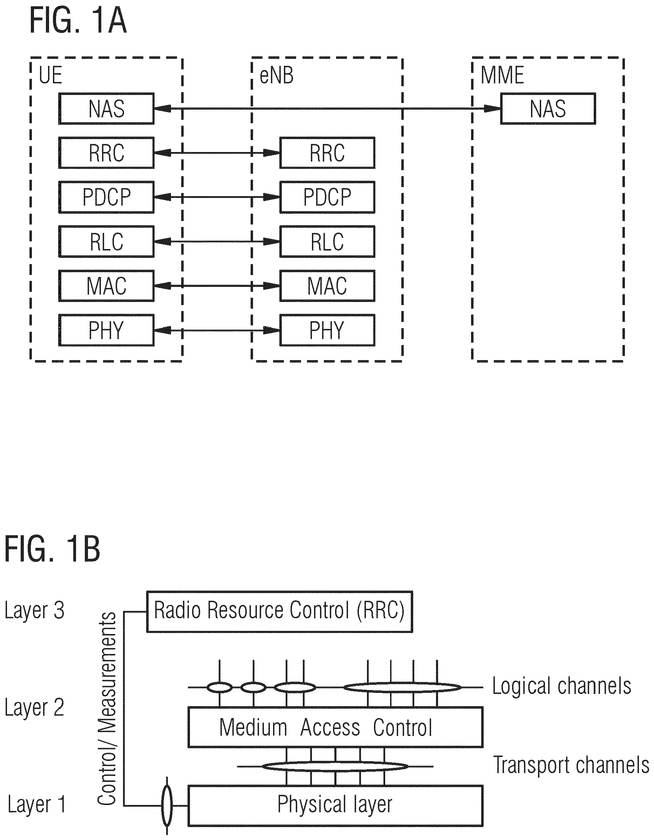

The communication protocols between an LTE UE and an LTE network can be segmented into user plane (or "U-plane") and control plane (or "C-plane") functionality. Figure 1A illustrates a block diagram of an exemplary C-plane protocol stack comprising Physical (PHY), Medium Access Control (MAC), Radio Link Control (RLC), Packet Data Convergence Protocol (PDCP), and Radio Resource Control (RRC) layers. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PHY, MAC, and RLC layers perform identical functions for both the U-plane and the C-plane. The PDCP layer provides ciphering/deciphering and integrity protection for both U-plane and C-plane, as well as other functions for the U-plane such as header compression.

Figure 1B shows a block diagram of an exemplary LTE radio interface protocol architecture from the perspective of the PHY. The interfaces between the various layers are provided by Service Access Points (SAPs), indicated by the ovals in Figure 1B. The PHY interfaces with MAC and RRC protocol layers described above. The MAC provides different logical channels to the RLC layer (also described above), characterized by the type of information transferred, whereas the PHY provides a transport channel to the MAC, characterized by how the information is transferred over the radio interface. In providing this transport service, the PHY performs various functions including error detection and correction; rate-matching and mapping of the coded transport channel onto physical channels; power weighting, modulation, and demodulation of physical channels; transmit diversity, beamforming, and multiple input multiple output (MIMO) antenna processing; and sending radio measurements to higher layers (e.g., RRC).

The multiple access scheme for the LTE PHY is based on Orthogonal Frequency Division Multiplexing (OFDM) with a cyclic prefix (CP) in the downlink, and on Single-Carrier Frequency Division Multiple Access (SC-FDMA) with a cyclic prefix in the uplink. To support transmission in paired and unpaired spectrum, the LTE PHY supports both Frequency Division Duplexing (FDD) (including both full- and half-duplex operation) and Time Division Duplexing (TDD).

Generally speaking, a physical channel corresponds to a set of resource elements carrying information that originates from higher layers. Downlink (i.e., eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY downlink includes various reference signals, synchronization signals, and discovery signals.

PDSCH is the main physical channel used for unicast downlink data transmission, but also for transmission of RAR (random access response), certain system information blocks, and paging information. PBCH carries the basic system information, required by the UE to access the network. PDCCH is used for transmitting downlink control information (DCI), mainly scheduling decisions, required for reception of PDSCH, and for uplink scheduling grants enabling transmission on PUSCH. PDCCH also carries channel quality feedback (e.g., CSI reports) for the uplink channel.

Uplink (*i.e.*, UE to eNB) physical channels provided by the LTE PHY include Physical Uplink Shared Channel (PUSCH), Physical Uplink Control Channel (PUCCH), and Physical Random Access Channel (PRACH). In addition, the LTE PHY uplink includes various reference signals including demodulation reference signals (DM-RS), which are transmitted to aid the eNB in the reception of an associated PUCCH or PUSCH; and sounding reference signals (SRS), which are not associated with any uplink channel. PUSCH is the uplink counterpart to the PDSCH. PRACH is used for transmitting random access preambles. PUCCH is used by UEs to transmit uplink control information, including hybrid ARQ (HARQ) feedback for DL data transmission, CSI reports for the DL channel, *etc.*

Both PDCCH and PUCCH are transmitted on aggregations of one or several consecutive control channel elements (CCEs). Each CCE is mapped to the physical resource based on resource element groups (REGs), each of which is comprised of a plurality of resource elements (REs). For example, a CCE may be comprised of nine (9) REGs, each of which is comprised of four (4) REs.

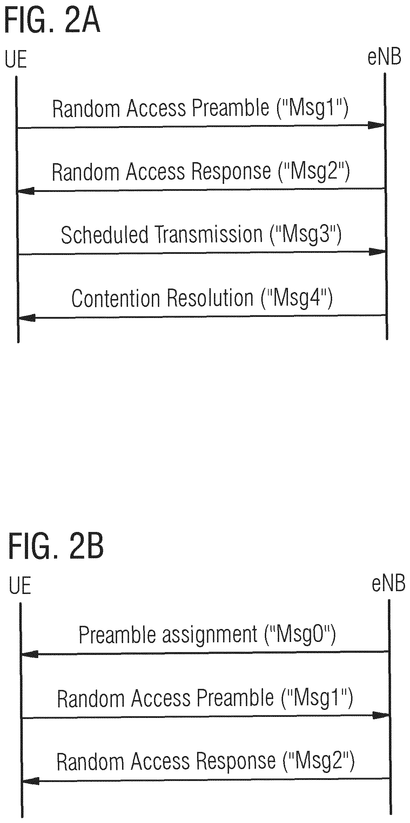

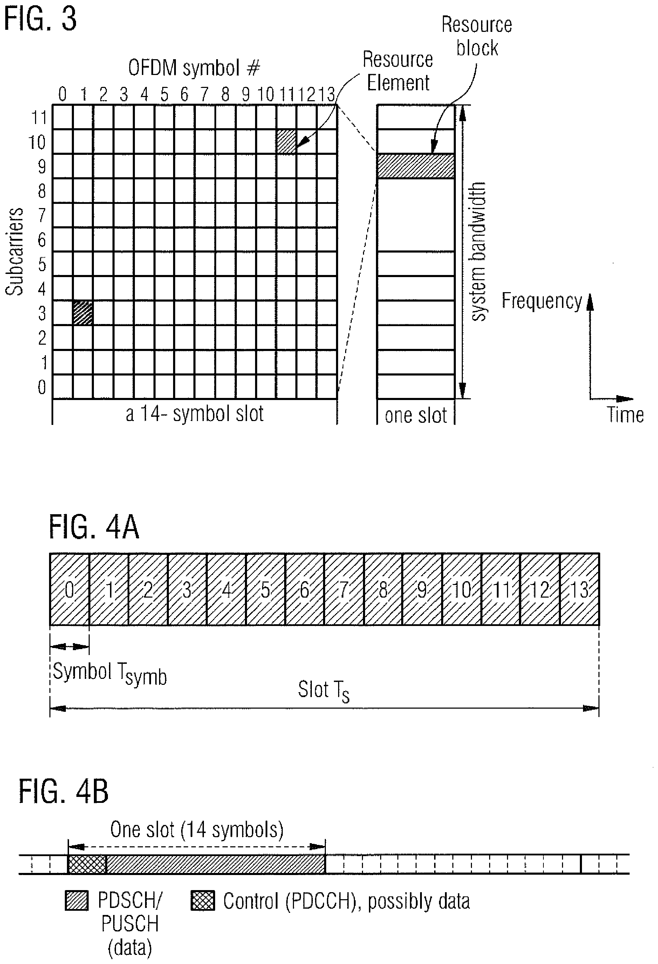

Figure 2A and Figure 2B show two exemplary Random Access (RA) procedures for an LTE UE. In general, the UE can perform a RA procedure during various situations, including: initial access from RRC_IDLE; RRC connection re-establishment; handover; and UL or DL data arrival in RRC_CONNECTED mode when the UE is unsynchronized with the serving eNB. In general, the UE and eNB can communicate user data after the RA procedure is completed.

Figure 2A shows a contention-based RA (CBRA) procedure. In the CBRA procedure, the UE initially selects one of the RA preambles available in the serving cell and transmits it to the eNB. This transmission is referred to as "Msg1." If the eNB receives the preamble correctly (due to, e.g., no collisions with other UEs transmitting the same preamble), it sends a random access response (RAR) to the UE. Typically the RAR includes a timing advance (TA) command for alignment of subsequent UE transmissions, as well as a grant of UL resources for subsequent UE transmission ("UL grant") and a temporary identifier assigned to the UE in the cell ("C-RNTI"). The RAR is also referred to as "Msg2."

Timing advance, TA, may be regarded as a (negative) offset, at the UE, between the start of a received downlink subframe and a transmitted uplink subframe. The UE appliers this offset for uplink transmissions to ensure that the downlink and uplink subframes are synchronised at the base station. A UE far from the base station encounter a larger propagation delay compared to a UE closer to the base station. Thus the timing advance increases with the distance of the UE to the base station.

As shown in Figure 2A, if the UE correctly receives the RAR, it responds with the transmission scheduled by the UL grant in the RAR, and includes the C-RNTI assigned by the RAR. This transmission is also referred to as "Msg3." If the eNB correctly receives Msg3, it responds with a contention resolution message ("Msg4").

Figure 2B shows a contention-free RA (CFRA) procedure. In this procedure, the eNB initially transmits (in "Msg0") an assignment of a specific RA preamble for the UE to use when accessing a cell. This can occur, e.g., during preparation of UE handover to a target cell where it must perform a RA procedure. Subsequently, the UE transmits the assigned RA preamble ("Msg1") and, if received correctly, the eNB responds with a RAR ("Msg2"). Since there is no contention due to the assigned preamble, the CBRA procedure does not include exchange of Msg3 and Msg4. In general, however, the CFRA procedure is inappropriate for initial UE access from RRC_IDLE because the UE is unable to receive the preamble assignment ("Msg0") prior to accessing the network.

While LTE was primarily designed for user-to-user communications, 5G (also referred to as "NR") cellular networks are envisioned to support both high single-user data rates (e.g., 1 Gb/s) and large-scale, machine-to-machine communication involving short, bursty transmissions from many different devices that share the frequency bandwidth. The 5G radio standards (also referred to as "New Radio" or "NR") are currently targeting a wide range of data services including eMBB (enhanced Mobile Broad Band) and URLLC (Ultra-Reliable Low Latency Communication). These services can have different requirements and objectives. For example, URLLC is intended to provide a data service with extremely strict error and latency requirements, *e.g.*, error probabilities as low as $10^{-5}$ or lower and 1 ms (or less) end-to-end latency. For eMBB, the requirements on latency and error probability can be less stringent whereas the required supported peak rate and/or spectral efficiency can be higher.

Figure 3 shows an exemplary time-frequency resource grid for an NR slot. As illustrated in Figure 3, an NR resource block (RB) (also referred to as "frequency-domain RB") is defined as $N_{\text{sc}}^{\text{RB}} = 12$ consecutive OFDM frequency-domain subcarriers for a duration of a 14-symbol slot. Like in LTE, a resource element (RE) consists of one subcarrier in one symbol. Common RBs (CRBs) are numbered from 0 to the end of the system bandwidth.

In Release-15 (Rel-5) NR, a UE can be configured with up to four carrier bandwidth parts (BWPs) in the downlink (DL), with a single downlink carrier BWP being active at any given time. Likewise, a UE can be configured with up to four carrier BWPs in the uplink, with a single uplink carrier BWP being active at a given time. If a UE is configured with a supplementary uplink, the UE can also be configured with up to four supplementary carrier BWPs in the supplementary uplink with a single supplementary uplink BWP part being active at a given time. Each BWP configured for a UE has a common reference of CRB 0, such that a particular configured BWP may start at a CRB greater than zero. In this manner, a UE can be configured with a narrow BWP (e.g., 10 MHz) and a wide BWP (e.g., 100 MHz), each starting at a particular CRB, but a UE can have only one active BWP at any time.

Within a BWP, RBs are defined and numbered in the frequency domain from 0 to $N_{\mathrm{BWP}j}^{\mathrm{size}}-1$ where $i$ is the index of the particular BWP for the carrier. Similar to LTE, each NR resource element (RE) corresponds to one OFDM subcarrier during one OFDM symbol interval. Various SCS values (referred to as numerologies) are supported in NR and are given by $\Delta f = (15 \times 2^{\alpha})$ *kHz* where $\alpha \in (0,1,2,3,4)$. The basic (or reference) subcarrier spacing of $\Delta f = 15kHz$ is also used in LTE. The slot length is inversely related to subcarrier spacing or numerology according to $1/2^{\alpha}$ ms. For example, there is one (1-ms) slot per subframe for $\Delta f = 15kHz,$ two 0.5-ms slots per subframe for $\Delta f = 30kHz,$ etc. In addition, the RB bandwidth is directly related to numerology according to $2^{\alpha} * 180kHz$.

Table 1 below summarizes supported NR transmission numerologies and associated parameters. Different DL and UL numerologies can be configured by the network.

Table 1.

| $\mu$ | $\Delta f = 2^{\mu} \cdot 15$ [kHz] | Cyclic prefix | Slot length | RB BW (MHz) |
|---|---|---|---|---|
| 0 | 15 | Normal | 1 ms | 0.18 |
| 1 | 30 | Normal | 0.5 ms | 0.36 |
| 2 | 60 | Normal, Extended | 0.25 ms | 0.72 |
| 3 | 120 | Normal | 125 $\mu$s | 1.44 |
| 4 | 240 | Normal | 62.5 $\mu$s | 2.88 |

An NR slot can include 14 symbols with normal cyclic prefixes and 12 symbols with extended cyclic prefixes. Figure 4A shows an exemplary NR slot configuration comprising 14 OFDM symbols, where the slot and symbols durations are denoted $T_s$ and $T_{symb}$, respectively. In addition, NR includes a Type-B scheduling, also known as "mini-slots." These are shorter than slots, typically ranging from one symbol up to one less than the number of symbols in a slot (e.g., 6 or 13), and can start at any symbol of a slot. Mini-slots can be used if the transmission duration of a slot is too long and/or the occurrence of the next slot start (slot alignment) is too late. Applications of mini-slots include unlicensed spectrum and latency-critical transmission (e.g., URLLC). However, mini-slots are not service-specific and can also be used for eMBB or other services.

Similar to LTE, various physical channels are also defined by 3GPP standards for 5G/NR. Like in LTE, an NR "physical channel" corresponds to a set of resource elements carrying information originating from higher layers. The following NR DL physical channels are defined, with abbreviations representing identical channel names as LTE unless otherwise noted:

- PDSCH, which is the main physical channel used for unicast downlink data transmission, but also for transmission of RAR (random access response), certain system information blocks (SIBs), and paging information.
- PBCH, which carries basic system information required by the UE to access the network.
- PDCCH, which is used for transmitting downlink control information (DCI), mainly scheduling decisions, required for reception of PDSCH, and for uplink scheduling grants enabling transmission on PUSCH.

Similarly, the following uplink physical channels are defined for NR:

- PUSCH, which is the uplink counterpart to the PDSCH.
- PUCCH, which is used by UEs to transmit uplink control information, including HARQ acknowledgements, channel state information (CSI) reports, etc.
- PRACH, which is used for UE random access preamble transmission.

Similar to LTE, NR data scheduling is done on a per-slot basis. In each slot, for downlink data scheduling, a base station (e.g., gNB) transmits downlink control information (DCI) over PDCCH that indicates which UE is scheduled to receive data in that slot and which RBs will carry that data. A UE first detects and decodes DCI and, if successful, then decodes the corresponding PDSCH based on the decoded DCI. Likewise, DCI can include UL grants that indicate which UE is scheduled to transmit data in a slot and which RBs will carry the data. A UE first detects and decodes an uplink grant from PDCCH and, if successful, then transmits the corresponding PUSCH on the resources indicated by the grant. DCI formats 0 0 and 0_1 are used to convey UL grants for PUSCH, while DCI formats 1_0 and 1_1 are used to convey PDSCH scheduling. Other DCI formats (2_0, 2_1, 2_2 and 2_3) are used for other purposes including transmission of slot format information, reserved resource, transmit power control information, *etc.*

Within an NR slot, the PDCCH channels are confined to a particular number of symbols and a particular number of subcarriers, where this region is referred to as the control resource set (CORESET). A CORESET is made up of multiple RBs (i.e., multiples of 12 REs) in the frequency domain and either one, two, or three OFDM symbols in the time domain, as further defined in 3GPP TS 38.211 V15.0.0 clause 7.3.2.2. A CORESET is functionally similar to the control region in LTE subframe. Like in LTE, the CORESET time domain size can be indicated by Physical Control Format Indicator Channel (PCFICH). In LTE, the frequency bandwidth of the control region is fixed (i.e., to the total system bandwidth), whereas in NR, the frequency bandwidth of the CORESET is variable. CORESET resources can be indicated to a UE by RRC signaling.

Figure 4B shows an exemplary NR slot structure with 15-kHz subcarrier spacing. In this exemplary structure, the first two symbols contain PDCCH and each of the remaining 12 symbols contains physical data channel (PDCH), i.e., either a PDSCH or PUSCH. Depending on the CORESET configuration, however, the first two slots can also carry PDSCH or other information, as required.

Currently, NR UEs can utilize a four-step, CBRA procedure for initial access to an NR network from RRC_IDLE. The CBRA procedure is similar to the LTE CBRA procedure shown in Figure 2A.

However, there has been a proposal within 3GPP for a two-step CBRA procedure for UE initial access. In such a procedure, the UE transmits a single message ("MsgA") that combines elements of "Msg1" and "Msg3" of the four-step procedure. The network responds with a single message ("MsgB") that combines elements of "Msg2" and "Msg4" of the four-step procedure, including the TA command. As such, the UE does not have benefit of a TA value from the network for alignment of its transmit timing for "MsgA". This can create various issues, problems, and/or difficulties in operations of the UE and the network.

WO2018/064372 A1 discloses a method and system for determining beam reciprocity for a beam of a wireless transmit/receive unit (WTRU) comprising selecting a type of random access procedure.

**SUMMARY**

It is an object of the present invention to provide to address shortcomings in existing techniques for signalling frequency-domain resource allocation.

This object is achieved by the independent claims. Advantageous embodiments are described in the dependent claims and by the following description.

**BRIEF DESCRIPTION OF THE DRAWINGS**

Figures 1A-B show various block diagrams of exemplary Long-Term Evolution (LTE) protocol architectures.

Figure 2A shows a first exemplary Random Access (RA) procedure LTE.

Figure 2B shows a second exemplary Random Access (RA) procedure for LTE.

Figure 3 shows an exemplary time-frequency resource grid for an NR slot.

Figures 4A and Figure 4B show an exemplary NR slot configuration.

Figure 5 shows a four-step CBRA procedure for UE initial access to NR networks.

Figure 6 shows the contents of an exemplary RAR message sent by a gNB in response to detecting a RA preamble from a UE.

Figure 7 shows an exemplary signalling diagram for a two-step CBRA procedure, according to various exemplary embodiments of the present disclosure.

Figure 8 shows a flow diagram of an exemplary method and/or procedure for a user equipment, according to various exemplary embodiments of the present disclosure.

Figure 9 shows a flow diagram of an exemplary method and/or procedure for a network node, according to various exemplary embodiments of the present disclosure.

Figures 10-11 illustrate two high-level views of an exemplary 5G network architecture.

Figure 12 illustrates a block diagram of an exemplary wireless communication device or UE configurable according to various exemplary embodiments of the present disclosure.

Figure 13 illustrates a block diagram of an exemplary network node configurable according to various exemplary embodiments of the present disclosure.

Figure 14 illustrates a block diagram of an exemplary network configuration usable to provide over-the-top (OTT) data services between a host computer and a UE, according to various exemplary embodiments of the present disclosure.

## DETAILED DESCRIPTION

Exemplary embodiments briefly summarized above will now be described more fully with reference to the accompanying drawings. These descriptions are provided by way of example to explain the subject matter to those skilled in the art, and should not be construed as limiting the scope of the subject matter to only the embodiments described herein. More specifically, examples are provided below that illustrate the operation of various embodiments according to the advantages discussed above.

As briefly mentioned above, in the proposed NR two-step CBRA procedure for UE initial access, the UE does not have benefit of a TA value from the network for alignment of its transmit timing for initial "MsgA". This can create various issues, problems, and/or difficulties in operations of the UE and the network, which are explained in more detail below.

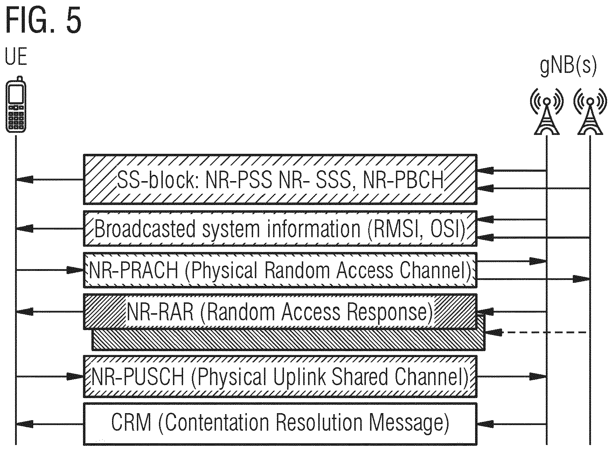

Figure 5 shows a conventional four-step CBRA procedure for UE initial access to NR networks. In this procedure, the UE detects a synchronization signal and PBCH block (SSB) and decodes the broadcasted system information (SI). The NR SSB comprises a Primary Synchronization Signal (PSS), a Secondary Synchronization Signal (SSS), a Physical Broadcast Channel (PBCH), and Demodulation Reference Symbols (DM-RS). For example, the broadcast SI can be carred on the PBCH, as discussed above. In case the UE detects multiple SSBs, the UE can select a particular SSB based on reference signal receive power (RSRP) measurements of the SSS/PSS (e.g., RSRP above a threshold).

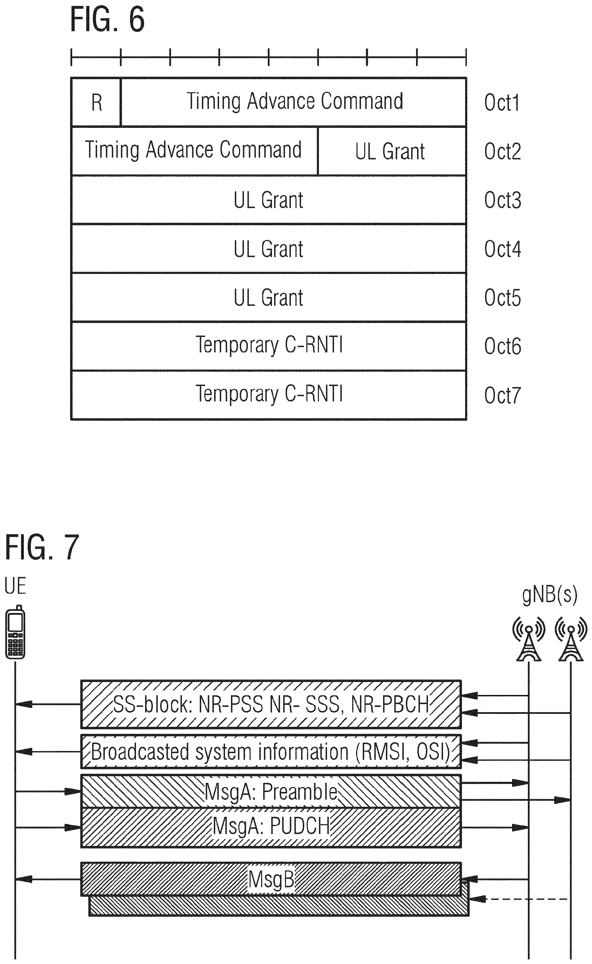

After successfully decoding the broadcast SI, the UE transmits a RA preamble on PRACH in the uplink. Similar to LTE, this is often referred to as "Msg1." The gNB replies with a Random Access Response (RAR), also often referred to as "Msg2" in a similar manner as for LTE. Figure 6 shows the contents of an exemplary RAR message sent by a gNB in response to detecting a RA preamble from a UE. As shown in Figure 6, a 12-bit TA command is carried by octets 1-2, while a 27-bit UL grant is carried by octets 2-5. Finally, octets 6-7 carry the unique identifier (C-RNTI) assigned to the UE by the network for use in subsequent messages during the CBRA procedure.

After correctly receiving the RAR, the UE transmits an identification message (often referred to as "Msg3") on PUSCH. When transmitting Msg3 on PUSCH, the UE adjusts its transmission timing (e.g., the beginning of an OFDM symbol) according to the received TA command so that it aligns within the cyclic prefix (CP) of the corresponding received OFDM symbol at the gNB receiver. This allows the gNB receiver to correctly receive the symbol containing Msg3 without intersymbol interference (ISI). Without this TA adjustment, in conventional large cells having a wide range of distances between UE and gNB, the gNB would need to include a very large CP to avoid ISI when demodulating and detecting PUSCH. This extra overhead reduces the PUSCH capacity. On the other hand, the TA adjustment can be unnecessary in small cells having a small range of distances between UE and gNB. Even so, since NR is required to support large cells in a similar manner as LTE, the four-step CBRA procedure with UE TA adjustment is necessary.

Recently, a work item (WI) for a two-step CBRA for UE initial access to NR networks was approved in 3GPP RANI #82 plenary meeting. Figure 7 shows an exemplary signalling diagram for this proposed two-step CBRA procedure. Similar to the four-step procedure shown in Figure 5, the UE initially detects a synchronization signal and PBCH block (SSB) and decodes the broadcasted system information (SI). After successfully decoding the broadcast SI, the UE transmits an uplink message, referred to as "MsgA," that includes a RA preamble transmitted on PRACH (e.g., similar to "Msg1") together with higher-layer data (e.g., RRC connection request, small data payload, etc.) transmitted on PUSCH.

As such, "MsgA" can be seen as a combination of conventional "Msg1" and "Msg3" from the four-step CBRA procedure. If the gNB correctly receives MsgA, it responds with a "MsgB." This message includes UE identifier assignment (e.g., C-RNTI), TA command, contention resolution message, etc. As such, "MsgB" can be seen as a combination of conventional "Msg2" and "Msg4" from the four-step CBRA procedure. One implication of this two-step procedure is that the UE does not have a TA command for adjusting its transmission timing of MsgA (e.g., on PUSCH), since that TA command is first provided in MsgB in response to MsgA.

In addition, the WI also sets forth a requirement that the two-step CBRA procedure should be applicable to any cell size supported for Rel-15 NR. This includes large cell sizes, such as discussed above. As such, the lack of TA command for adjusting UL transmission timing can cause the UE to transmit PUSCH MsgA misaligned with the gNB's received OFDM symbol cyclic prefix. As discussed above, this misalignment can result in PUSCH detection, demodulation, and/or decoding errors as well as ISI to OFDM symbols adjacent in time.

Exemplary embodiments of the present disclosure address these and other issues, problems, and/or difficulties by providing techniques for a UE to select between two- and four-step CBRA procedures for initial access in NR networks based on various factors and/or information. By selecting the two-step CBRA procedure only when appropriate, the UE facilitates correct detection, demodulation, and/or decoding of MsgA. In other scenarios where the two-step CBRA procedure is inappropriate, the UE utilizes the four-step procedure. In this manner, the UE avoids creating ISI on PUSCH for other UEs. For example, by selecting the four-step CBRA procedure when located near the edge of a large cell, a UE avoids creating PUSCH interference for UEs located near the network node (e.g., base station or gNB) serving the cell.

In a first group of embodiments, the UE can select CBRA mode (e.g., as between two- and four-step) based on some determined bounds or threshold for an otherwise unknown TA.

In some of these embodiments, the selection of CBRA mode can be based on the estimated distance between the UE and the network node (e.g., the network node's receiving antenna for the cell). If the UE determines that the distance is below a threshold, then the UE can select two-step CBRA with MsgA TA set to zero. The threshold can be set small enough such that this zero-TA transmission does not cause excessive ISI at the network node receiver, and such that correct reception of PUSCH is possible.

In some of these embodiments, the UE can estimate the distance from the network node based on UE-internal position estimation (e.g., based on GNSS/GPS satellite signals) together with knowledge about cell site position, such as from publicly available databases. For example, the UE may have previously accessed such information remotely and then stored it locally, which the UE can then use during the subsequent initial access procedure towards the network node. Alternately, the network node can broadcast information about the cell site location in the SI.

In some of these embodiments, the selection of CBRA mode can be based on the measured signal strength of a signal transmitted by the network node, which the UE can use as an estimate (or proxy) for the distance from the network node. For example, a UE can measure the DL reference signal received power (RSRP, e.g., for SSB) on a serving cell and, if it is over a threshold, select the two-step CBRA procedure for initial access. Otherwise, the UE can select the four-step procedure.

In some embodiments, the RSRP threshold can be configured in broadcast SI or sent to a UE using dedicated RRC signaling. In some embodiments, the threshold can be hard-coded in a specification. In some embodiments, the threshold can be adjusted and/or corrected by the UE according to the network node transmit power, which the UE can receive as part of the broadcast SI.

In some embodiments, the threshold-based selection between two- and four-step CBRA can be configured by the network node. For example, the network node can include a flag (e.g., as part of an RRC configuration) that indicates whether threshold-based selection should be applied. This indication can be broadcast in a cell (e.g., as part of SI) and/or sent to individual UEs in RRC messages. For example, a network node could indicate for all cells about a certain size that selection is enabled, and indicate for all cells below that size that selection is disabled.

In other embodiments, a UE can perform the threshold-based CBRA mode selection without any configuration from the network, which can facilitate solutions that do not require 3GPP standardization.

In some embodiments, the UE can perform CBRA mode reselection for each new preamble or MsgA transmission. In the four-step CBRA procedure, the UE may transmit multiple RA preambles ("Msg1") before receiving a response ("Msg2") from the network node. Similarly, in the two-step CBRA procedure, the UE may transmit multiple MsgA (i.e., RA preamble on PRACH, other information on PUSCH) before receiving a response ("MsgB") from the network node. In these embodiments, prior to each retransmission, the UE can compare a measured RSRP to the threshold to determine whether to transmit the RA preamble (four-step CBRA) or MsgA (two-step CBRA). Alternately, the UE can make this determination every nth retransmission of either preamble or MsgA.

In some embodiments, the UE can also incorporate information about cell random-access load together with the distance estimate (e.g., RSRP-based) when making the CBRA mode selection. For example, the network node can provide information about cell random-access load in broadcast SI, received by the UE prior to initiating the CBRA procedure. In some embodiments, the network node can provide load information for four-step CBRA resources (e.g., PRACH) and for two-step CBRA resources (e.g., additionally PUSCH). For example, if the information indicates that PUSCH is heavily loaded, the UE can determine to use the four-step CBRA whereby it receives an UL grant for transmitting Msg3 on PUSCH.

In a second group of embodiments, a UE can maintain an estimated TA value, based on a TA value used during a previous connection or network access to the same cell. If the UE determines that the estimated TA value is still valid, the UE can select the two-step CBRA and adjust the MsgA transmission timing according to the estimated TA value. On the other hand, if the UE determines that the estimated TA value is no longer valid (e.g., the UE has moved a certain distance or a certain duration has elapsed since the TA value was known to be valid), the UE can select the four-step CBRA procedure.

In various embodiments, if the CBRA selection is based on UE movement distance since the estimated TA value was known to be valid, the UE can estimate the position change in several different ways. In some embodiments, the UE can use an accurate internal timing reference (e.g., clock) to detect a change in the UE's observed timing of signals, received from the cell, whose actual timing is known and/or fixed (e.g., slot boundaries, subframe boundaries, etc.). The detected change can be relative to the observed timing of such signals with the estimated TA value was known to be valid. The UE can then determine whether this observed timing change - corresponding to a particular change in distance - is greater than a threshold.

In other embodiments, if the UE does not maintain an accurate-enough timing reference, the UE may detect, and estimate the amount of, movement by performing Doppler estimation on signals transmitted by the network node and/or one or more further network nodes. For example, the Doppler estimate may be based on PBCH, DMRS, or other SSB signal components. The UE can also determine a movement estimate by integrated this Doppler estimate (or multiple Doppler estimates at different points in time) over the elapsed time since the estimated TA value was known to be valid. If the Doppler estimate and/or the movement distance estimate exceeds a respective threshold, the UE selects the four-step CBRA procedure. Otherwise, the UE selects the two-step CBRA procedure.

In other embodiments, the UE can use relative SSB timing differences between multiple nodes (e.g., the serving/camping network node and one or more neighbor nodes) to detect movement and estimate its amount. By comparing current and previous relative timing differences, changes over time indicate that vehicular movement has occurred. As a three-cell example, the UE may record and compare pairwise timing differences between cell1/cell2, cell2/cell3, and cell3/cell1. The largest change among those differences can be used to estimate the propagation delay change and the corresponding distance change. It the distance change exceeds a threshold, the UE can select the four-step CBRA procedure rather than risking that the unadjusted transmitted PUSCH arrives outside the network node receiver's CP.

In other embodiments, the UE can estimate movement and/or position changes based on on UE-internal position estimation (e.g., GNSS-based).

Regardless of the particular technique used by the UE to estimate the amount of movement since the estimated TA value was known to be valid, the threshold for comparing this estimated movement can be configured in various ways and/or based on various requirements. In some embodiments, such thresholds can be configured by the network, e.g., via broadcast SI together with the selection enabling indicator. In other embodiments, the UE can determine the threshold based on its own requirements. For example, a UE targeting robust operation can configure a very small movement threshold, such that the UE selects two-step CBRA only when approximately zero movement is detected for the UE. On the other hand, if the UE desires faster RA at the expense of some possible loss of robustness, the UE can configure a higher threshold whereby two-step CBRA is selected even when the UE has moved a noticeable amount.

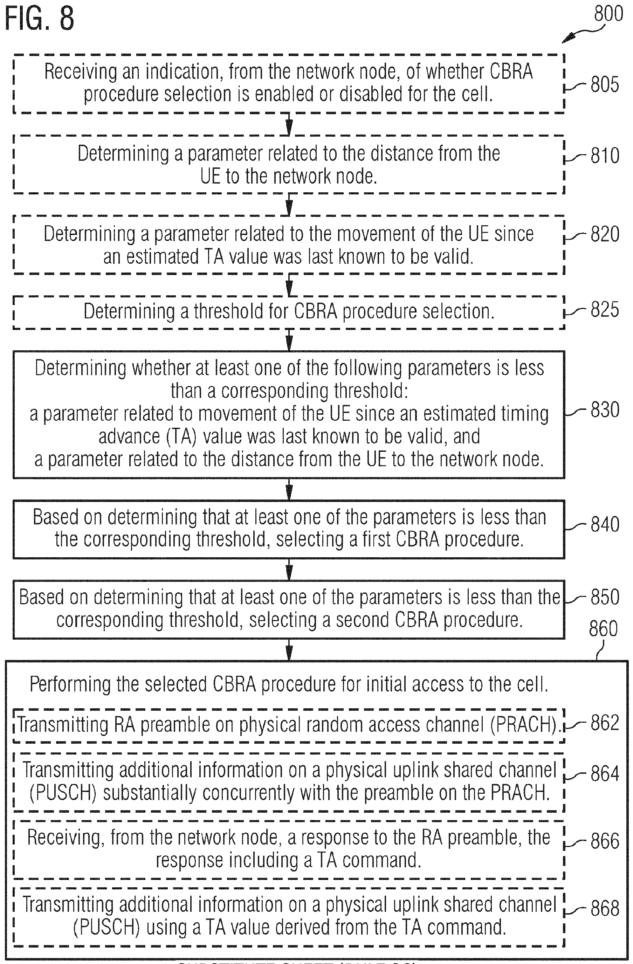

Figure 8 illustrates an exemplary method and/or procedure for selecting a contention-based random-access (CBRA) procedure for initial access to a cell served by a network node in a wireless communication network, in accordance with various exemplary embodiments of the present disclosure. The exemplary method and/or procedure can be performed by a user equipment (UE, e.g., wireless device, IoT device, modem, etc., or component thereof) in communication with a network node (e.g., base station, gNB, eNB, en-gNB, ng-eNB, etc., or component thereof) in a wireless communication network.

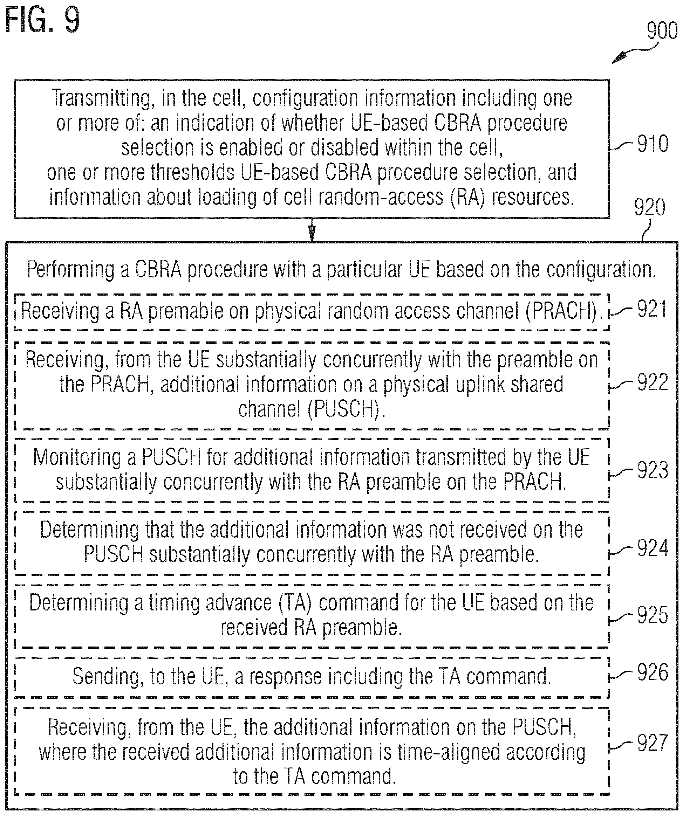

Although Figure 8 shows blocks arranged in a particular order, this order is exemplary and the operations corresponding to the blocks can be performed in different orders, and can be combined and/or divided into blocks having different functionality than shown in Figure 8. Furthermore, the exemplary method and/or procedure shown in Figure 8 can be complementary to the exemplary method and/or procedure shown in Figure 9. In other words, exemplary methods and/or procedures shown in Figures 8 and 9 are capable of being used cooperatively to provide the benefits, advantages, and/or solutions to problems described herein above. Optional operations are indicated by dashed lines.

In some embodiments, the exemplary method and/or procedure can include the operations of block 810, where the UE can determine a parameter related to the distance from the UE to the network node. This can involve various operations, including one or more of the following: measuring a received power (RSRP) of one or more signals transmitted by the network node; adjusting the measured RSRP based on an indication of transmit power used in the cell; determining the UE position based on signals transmitted by satellites; and determining the cell site position based on information stored by the UE or broadcast by the network node.

In some embodiments, the exemplary method and/or procedure can include the operations of block 820, where the UE can determine a parameter related to the movement of the UE since an estimated TA value was last known to be valid. This can involve various operations, including one or more of the following: detecting a change in the UE's observed timing of one or more signals transmitted by the network node; estimating the amount of Doppler frequency shift present in one or more signals transmitted by the network node; detecting a change in one or more observed time differences (OTDs), where each OTD is between signals associated with a pair of cells; and detecting a change in UE position based on signals transmitted by satellites.

In some embodiments, the exemplary method and/or procedure can include the operations of block 825, where the UE can determine one or more thresholds for CBRA procedure selection. These thresholds can be determined in various ways including based on: system information (SI) for the cell, broadcast by the network node; dedicated radio resource control (RRC) signalling between the network node and the UE; and UE performance requirements.

The exemplary method and/or procedure can also include the operations of block 830, where the UE can determine whether at least one of the following parameters is less than a corresponding threshold (e.g., determined in block 825): the parameter related to movement of the UE since the estimated TA value was last known to be valid (e.g., determined in block 810), and the parameter related to the distance from the UE to the network node (e.g., determined in block 820).

The exemplary method and/or procedure can also include the operations of block 840, where the UE can, based on determining that at least one of the parameters is less than the corresponding threshold, select a first CBRA procedure. For example, the first CBRA procedure can be a two-step CBRA procedure, as described above.

The exemplary method and/or procedure can also include the operations of block 850, where the UE can, based on determining that at least one of the parameters is not less than the corresponding threshold, select a second CBRA procedure. For example, the first CBRA procedure can be a four-step CBRA procedure, as described above.

In some embodiments, selecting the first CBRA procedure (e.g., in block 840) or the second CBRA procedure (e.g., in block 850) can be further based on information about loading of cell random-access (RA) resources.

In some embodiments, the exemplary method and/or procedure can include the operations of block 805, where the UE can receive an indication, from the network node, of whether selecting the CBRA procedure is enabled or disabled for the cell. In such embodiments, if the UE determines, from the indication, that the selecting is disabled for the cell, the UE can perform the first CBRA procedure, e.g., without need of performing the threshold-based selection discussed above. Alternately, this can be viewed as the UE "selecting" the first CBRA procedure by default.

The exemplary method and/or procedure can also include the operations of block 860, where the UE can perform the selected CBRA procedure for initial access to the cell. In some embodiments, this can include the operations of sub-block 862, where the UE can transmit a RA preamble on a physical random access channel (PRACH). In some embodiments, this can include the operations of sub-block 864, where if the first CBRA procedure is selected, the UE can transmit the additional information on a physical uplink shared channel (PUSCH) substantially concurrently with the RA preamble on the PRACH. In such embodiments, the additional information is transmitted on the PUSCH using a TA value determined from one of the following: the estimated TA value, and the parameter related to the distance. In some embodiments, the UE can use a TA value of zero for the PUSCH transmission.

In some embodiments, the operations of block 860 can include the operations of sub-block 866, where if the second CBRA procedure is selected, the UE can receive, from the network node, a response to the RA preamble, the response including a TA command. In such embodiments, the operations of block 860 can also include the operations of sub-block 868, where the UE can transmit the additional information on a physical uplink shared channel (PUSCH) using a TA value derived from the TA command.

Figure 9 illustrates an exemplary method and/or procedure for supporting selectable contention-based random-access (CBRA) procedures for user equipment (UE) initial access to a cell served by the network node, in accordance with particular exemplary embodiments of the present disclosure. The exemplary method and/or procedure can be performed by a network node (e.g., base station, gNB, eNB, en-gNB, ng-eNB, etc., or component thereof) in a wireless communication network.

Although Figure 9 shows blocks arranged in a particular order, this order is exemplary and the operations corresponding to the blocks can be performed in different orders, and can be combined and/or divided into blocks having different functionality than shown in Figure 9. Furthermore, the exemplary method and/or procedure shown in Figure 9 can be complementary to the exemplary method and/or procedure illustrated in Figure 8. In other words, the exemplary methods and/or procedures shown in Figures 8-9 are capable of being used cooperatively to provide the benefits, advantages, and/or solutions to problems described herein above. Optional operations are indicated by dashed lines.

The exemplary method and/or procedure can include the operations of block 910, where the network node can transmit, in the cell, configuration information including one or more of the following: an indication of whether UE-based CBRA procedure selection is enabled or disabled within the cell; one or more thresholds for UE-based CBRA procedure selection; and information about loading of cell random-access (RA) resources.

The exemplary method and/or procedure can include the operations of block 920, where the network node can perform a CBRA procedure with a particular UE based on the configuration information. In some embodiments, the operations of block 920 can include the operations of sub-block 921, where the network node can receive a RA preamble, from the particular UE, on a physical random access channel (PRACH). In some embodiments, the operations of block 920 can include the operations of sub-block 922, where if the configuration information indicates that UE-based CBRA procedure selection is disabled, the network node can receive, from the particular UE substantially concurrently with the RA preamble on the PRACH, additional information transmitted on a physical uplink shared channel (PUSCH).

In some embodiments, the operations of block 920 can include the operations of sub-block 923, where if the configuration information indicates that UE-based CBRA procedure selection is disabled, the UE can monitor a physical uplink shared channel (PUSCH) for additional information transmitted by the particular UE substantially concurrently with the RA preamble on the PRACH. In such embodiments, the operations of block 920 can also include the operations of sub-block 924, where the UE can determine (e.g., based on the monitoring) that the additional information was not received on the PUSCH substantially concurrently with the RA preamble. In such embodiments, the operations of block 920 can also include determining a timing advance (TA) command for the UE based on the received RA preamble (sub-block 925); sending, to the UE, a response including the TA command (sub-block 926); and receiving, from the UE, the additional information on the PUSCH, where the received additional information is time-aligned according to the TA command (sub-block 927).

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

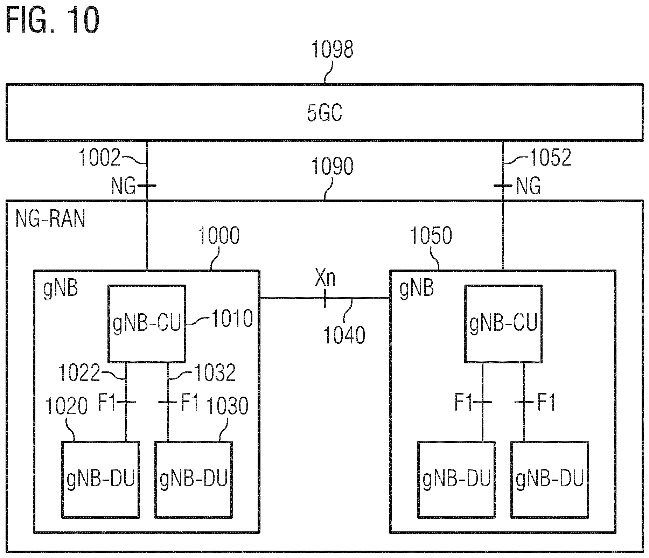

Figure 10 illustrates a high-level view of the 5G network architecture, consisting of a Next Generation RAN (NG-RAN) 1099 and a 5G Core (5GC) 1098. NG-RAN 1099 can include a set gNBs connected to the 5GC via one or more NG interfaces, such as gNBs 1000, 1050 connected via interfaces 1002, 1052, respectively. In addition, the gNBs can be connected to each other via one or more Xn interfaces, such as Xn interface 1040 between gNBs 1000 and 1050.

NG-RAN 1099 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB can be connected to all 5GC nodes within an "AMF Region," which is defined in 3GPP TS 23.501. If security protection for CP and UP data on TNL of NG-RAN interfaces is supported, NDS/IP (3GPP TS 33.401) can be applied.

The NG-RAN logical nodes shown in Figure 10 (and described in TS 38.401 and TR 38.801) include a central (or centralized) unit (CU or gNB-CU) and one or more distributed (or decentralized) units (DU or gNB-DU). For example, gNB 1000 includes gNB-CU 1010 and gNB-DUs 1020 and 1030. CUs (e.g., gNB-CU 1010) are logical nodes that host higher-layer protocols and perform various gNB functions such controlling the operation of DUs. Similarly, each DU is a logical node that hosts lower-layer protocols and can include various subsets of the gNB functions, depending on the functional split. As such, each of the CUs and DUs can include various circuitry needed to perform their respective functions, including processing circuitry, transceiver circuitry (e.g., for communication), and power supply circuitry. Moreover, the terms "central unit" and "centralized unit" are used interchangeably herein, as are the terms "distributed unit" and "decentralized unit."

A gNB-CU connects to gNB-DUs over respective F1 logical interfaces, such as interfaces 1022 and 232 shown in Figure 3. The gNB-CU and connected gNB-DUs are only visible to other gNBs and 5GC 1098 as a gNB. In other words, the F1 interface is not visible beyond a gNB-CU.

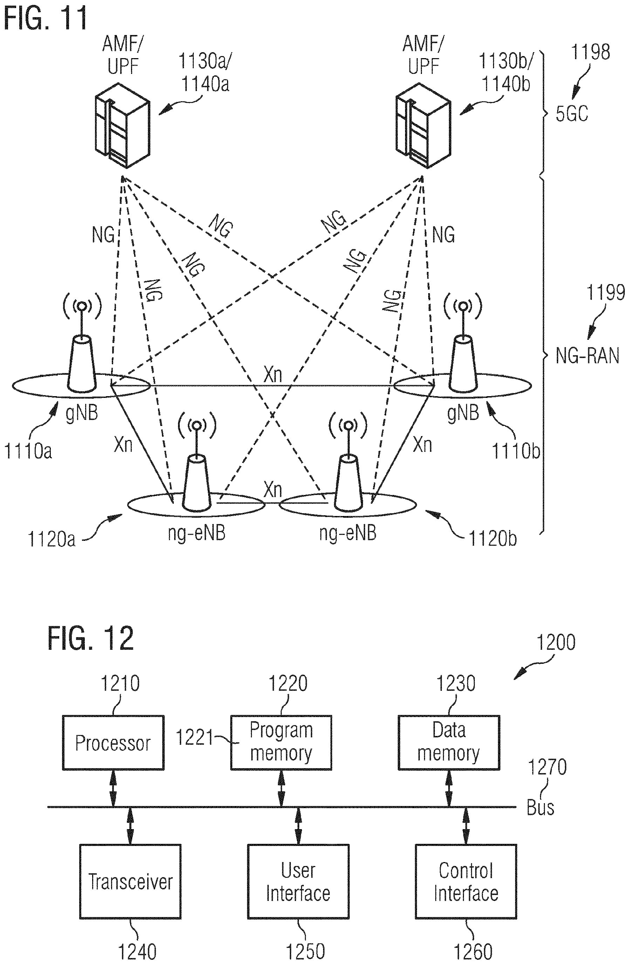

Figure 11 shows a high-level view of an exemplary 5G network architecture, including a Next Generation Radio Access Network (NG-RAN) 1199 and a 5G Core (5GC) 1198. As shown in the figure, NG-RAN 1199 can include gNBs 1110 (e.g., 1110a,b) and ng-eNBs 1120 (e.g., 1120a,b) that are interconnected with each other via respective Xn interfaces. The gNBs and ng-eNBs are also connected via the NG interfaces to 5GC 1198, more specifically to the AMF (Access and Mobility Management Function) 1130 (e.g., AMFs 1130a,b) via respective NG-C interfaces and to the UPF (User Plane Function) 1140 (e.g., UPFs 1140a,b) via respective NG-U interfaces.

Each of the gNBs 1110 can support the NR radio interface, including frequency division duplexing (FDD), time division duplexing (TDD), or a combination thereof. In contrast, each of ng-eNBs 1120 supports the LTE radio interface but, unlike conventional LTE eNBs, connect to the 5GC via the NG interface.

Figure 12 shows a block diagram of an exemplary wireless device or user equipment (UE) configurable according to various exemplary embodiments of the present disclosure, including by execution of instructions on a computer-readable medium that correspond to, or comprise, any of the exemplary methods and/or procedures described above.

Exemplary device 1200 can comprise a processor 1210 that can be operably connected to a program memory 1220 and/or a data memory 1230 via a bus 1270 that can comprise parallel address and data buses, serial ports, or other methods and/or structures known to those of ordinary skill in the art. Program memory 1220 can store software code, programs, and/or instructions (collectively shown as computer program product 1221 in Figure 12) executed by processor 1210 that can configure and/or facilitate device 1200 to perform various operations, including operations described below. For example, execution of such instructions can configure and/or facilitate exemplary device 1200 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.,* or any other current or future protocols that can be utilized in conjunction with transceiver 1240, user interface 1250, and/or host interface 1260.

As another example, processor 1210 can execute program code stored in program memory 1220 that corresponds to MAC, RLC, PDCP, and RRC layer protocols standardized by 3GPP *(e.g.,* for NR and/or LTE). As a further example, processor 1210 can execute program code stored in program memory 1220 that, together with transceiver 1240, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA).

Program memory 1220 can also comprises software code executed by processor 1210 to control the functions of device 1200, including configuring and controlling various components such as transceiver 1240, user interface 1250, and/or host interface 1260. Program memory 1220 can also comprise one or more application programs and/or modules comprising computer-executable instructions embodying any of the exemplary methods and/or procedures described herein. Such software code can be specified or written using any known or future developed programming language, such as *e.g.,* Java, C++, C, Objective C, HTML, XHTML, machine code, and Assembler, as long as the desired functionality, *e.g.*, as defined by the implemented method steps, is preserved. In addition, or as an alternative, program memory 1220 can comprise an external storage arrangement (not shown) remote from device 1200, from which the instructions can be downloaded into program memory 1220 located within or removably coupled to device 1200, so as to enable execution of such instructions.

Data memory 1230 can comprise memory area for processor 1210 to store variables used in protocols, configuration, control, and other functions of device 1200, including operations corresponding to, or comprising, any of the exemplary methods and/or procedures described herein. Moreover, program memory 1220 and/or data memory 1230 can comprise non-volatile memory *(e.g.,* flash memory), volatile memory *(e.g.,* static or dynamic RAM), or a combination thereof. Furthermore, data memory 1230 can comprise a memory slot by which removable memory cards in one or more formats *(e.g.,* SD Card, Memory Stick, Compact Flash, *etc.)* can be inserted and removed. Persons of ordinary skill in the art will recognize that processor 1210 can comprise multiple individual processors (including, *e.g.,* multi-core processors), each of which implements a portion of the functionality described above. In such cases, multiple individual processors can be commonly connected to program memory 1220 and data memory 1230 or individually connected to multiple individual program memories and or data memories. More generally, persons of ordinary skill in the art will recognize that various protocols and other functions of device 1200 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

A transceiver 1240 can comprise radio-frequency transmitter and/or receiver circuitry that facilitates the device 1200 to communicate with other equipment supporting like wireless communication standards and/or protocols. In some exemplary embodiments, the transceiver 1240 includes a transmitter and a receiver that enable device 1200 to communicate with various 5G/NR networks according to various protocols and/or methods proposed for standardization by 3GPP and/or other standards bodies. For example, such functionality can operate cooperatively with processor 1210 to implement a PHY layer based on OFDM, OFDMA, and/or SC-FDMA technologies, such as described herein with respect to other figures.

In some exemplary embodiments, the transceiver 1240 includes an LTE transmitter and receiver that can facilitate the device 1200 to communicate with various LTE LTE-Advanced (LTE-A), and/or NR networks according to standards promulgated by 3GPP. In some exemplary embodiments of the present disclosure, the transceiver 1240 includes circuitry, firmware, *etc.* necessary for the device 1200 to communicate with various 5G/NR, LTE, LTE-A, UMTS, and/or GSM/EDGE networks, also according to 3GPP standards. In some exemplary embodiments of the present disclosure, transceiver 1240 includes circuitry, firmware, *etc.* necessary for the device 1200 to communicate with various CDMA2000 networks, according to 3GPP2 standards.

In some exemplary embodiments of the present disclosure, the transceiver 1240 is capable of communicating using radio technologies that operate in unlicensed frequency bands, such as IEEE 802.11 WiFi that operates using frequencies in the regions of 2.4, 5.6, and/or 60 GHz. In some exemplary embodiments of the present disclosure, transceiver 1240 can comprise a transceiver that is capable of wired communication, such as by using IEEE 802.3 Ethernet technology. The functionality particular to each of these embodiments can be coupled with or controlled by other circuitry in the device 1200, such as the processor 1210 executing program code stored in program memory 1220 in conjunction with, or supported by, data memory 1230.

User interface 1250 can take various forms depending on the particular embodiment of device 1200, or can be absent from device 1200 entirely. In some exemplary embodiments, user interface 1250 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other embodiments, the device 1200 can comprise a tablet computing device including a larger touchscreen display. In such embodiments, one or more of the mechanical features of the user interface 1250 can be replaced by comparable or functionally equivalent virtual user interface features *(e.g.,* virtual keypad, virtual buttons, *etc.)* implemented using the touchscreen display, as familiar to persons of ordinary skill in the art. In other embodiments, the device 1200 can be a digital computing device, such as a laptop computer, desktop computer, workstation, *etc.* that comprises a mechanical keyboard that can be integrated, detached, or detachable depending on the particular exemplary embodiment. Such a digital computing device can also comprise a touch screen display. Many exemplary embodiments of the device 1200 having a touch screen display are capable of receiving user inputs, such as inputs related to exemplary methods and/or procedures described herein or otherwise known to persons of ordinary skill in the art.

In some exemplary embodiments of the present disclosure, device 1200 can comprise an orientation sensor, which can be used in various ways by features and functions of device 1200. For example, the device 1200 can use outputs of the orientation sensor to determine when a user has changed the physical orientation of the device 1200's touch screen display. An indication signal from the orientation sensor can be available to any application program executing on the device 1200, such that an application program can change the orientation of a screen display *(e.g.,* from portrait to landscape) automatically when the indication signal indicates an approximate 90-degree change in physical orientation of the device. In this exemplary manner, the application program can maintain the screen display in a manner that is readable by the user, regardless of the physical orientation of the device. In addition, the output of the orientation sensor can be used in conjunction with various exemplary embodiments of the present disclosure.

A control interface 1260 of the device 1200 can take various forms depending on the particular exemplary embodiment of device 1200 and of the particular interface requirements of other devices that the device 1200 is intended to communicate with and/or control. For example, the control interface 1260 can comprise an RS-232 interface, an RS-485 interface, a USB interface, an HDMI interface, a Bluetooth interface, an IEEE ("Firewire") interface, an I$^2$C interface, a PCMCIA interface, or the like. In some exemplary embodiments of the present disclosure, control interface 1260 can comprise an IEEE 802.3 Ethernet interface such as described above. In some exemplary embodiments of the present disclosure, the control interface 1260 can comprise analog interface circuitry including, for example, one or more digital-to-analog (D/A) and/or analog-to-digital (A/D) converters.

Persons of ordinary skill in the art can recognize the above list of features, interfaces, and radio-frequency communication standards is merely exemplary, and not limiting to the scope of the present disclosure. In other words, the device 1200 can comprise more functionality than is shown in Figure 12 including, for example, a video and/or still-image camera, microphone, media player and/or recorder, *etc.* Moreover, transceiver 1240 can include circuitry necessary to communicate using additional radio-frequency communication standards including Bluetooth, GPS, and/or others. Moreover, the processor 1210 can execute software code stored in the program memory 1220 to control such additional functionality. For example, directional velocity and/or position estimates output from a GPS receiver can be available to any application program executing on the device 1200, including various exemplary methods and/or computer-readable media according to various exemplary embodiments of the present disclosure.

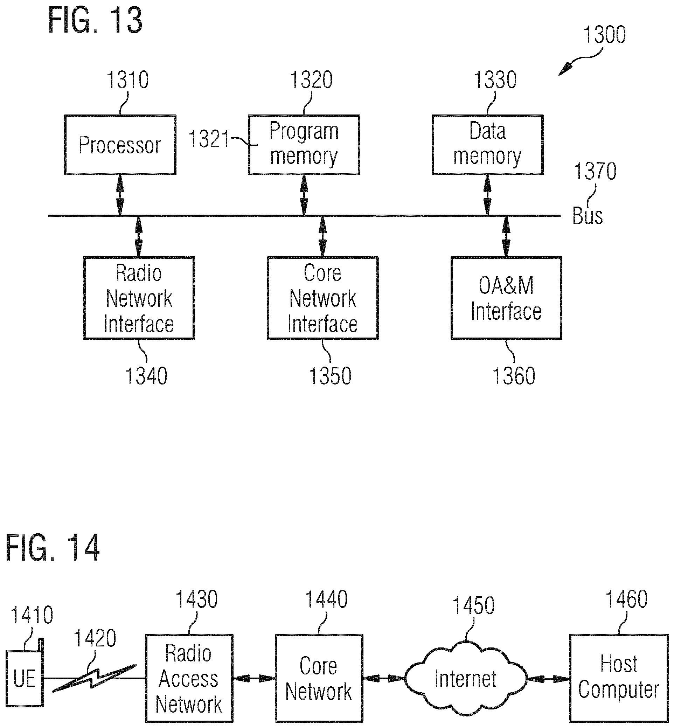

Figure 13 shows a block diagram of an exemplary network node 1300 configurable according to various embodiments of the present disclosure, including those described above with reference to other figures. In some exemplary embodiments, network node 1300 can comprise a base station, eNB, gNB, or component thereof. Network node 1300 comprises processor 1310 which is operably connected to program memory 1320 and data memory 1330 via bus 1370, which can comprise parallel address and data buses, serial ports, or other methods and/or structures known to those of ordinary skill in the art.

Program memory 1320 can store software code, programs, and/or instructions (collectively shown as computer program product 1321 in Figure 13) executed by processor 1310 that can configure and/or facilitate network node 1300 to perform various operations, including operations described below. For example, execution of such stored instructions can configure network node 1300 to communicate with one or more other devices using protocols according to various embodiments of the present disclosure, including one or more exemplary methods and/or procedures discussed above. Furthermore, execution of such stored instructions can also configure and/or facilitate network node 1300 to communicate with one or more other devices using other protocols or protocol layers, such as one or more of the PHY, MAC, RLC, PDCP, and RRC layer protocols standardized by 3GPP for LTE, LTE-A, and/or NR, or any other higher-layer protocols utilized in conjunction with radio network interface 1340 and core network interface 1350. By way of example and without limitation, core network interface 1350 can comprise the S1 interface and radio network interface 1350 can comprise the Uu interface, as standardized by 3GPP. Program memory 1320 can also include software code executed by processor 1310 to control the functions of network node 1300, including configuring and controlling various components such as radio network interface 1340 and core network interface 1350.

Data memory 1330 can comprise memory area for processor 1310 to store variables used in protocols, configuration, control, and other functions of network node 1300. As such, program memory 1320 and data memory 1330 can comprise non-volatile memory (*e.g.*, flash memory, hard disk, *etc.),* volatile memory *(e.g.,* static or dynamic RAM), network-based (*e.g.*, "cloud") storage, or a combination thereof. Persons of ordinary skill in the art will recognize that processor 1310 can comprise multiple individual processors (not shown), each of which implements a portion of the functionality described above. In such case, multiple individual processors may be commonly connected to program memory 1320 and data memory 1330 or individually connected to multiple individual program memories and/or data memories. More generally, persons of ordinary skill in the art will recognize that various protocols and other functions of network node 1300 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1340 can comprise transmitters, receivers, signal processors, ASICs, antennas, beamforming units, and other circuitry that enables network node 1300 to communicate with other equipment such as, in some embodiments, a plurality of compatible user equipment (UE). In some exemplary embodiments, radio network interface can comprise various protocols or protocol layers, such as the PHY, MAC, RLC, PDCP, and RRC layer protocols standardized by 3GPP for LTE, LTE-A, and/or 5G/NR; improvements thereto such as described herein above; or any other higher-layer protocols utilized in conjunction with radio network interface 1340. According to further exemplary embodiments of the present disclosure, the radio network interface 1340 can comprise a PHY layer based on OFDM, OFDMA, and/or SC-FDMA technologies. In some embodiments, the functionality of such a PHY layer can be provided cooperatively by radio network interface 1340 and processor 1310 (including program code in memory 1320).

Core network interface 1350 can comprise transmitters, receivers, and other circuitry that enables network node 1300 to communicate with other equipment in a core network such as, in some embodiments, circuit-switched (CS) and/or packet-switched Core (PS) networks. In some embodiments, core network interface 1350 can comprise the S1 interface standardized by 3GPP. In some exemplary embodiments, core network interface 1350 can comprise one or more interfaces to one or more SGWs, MMEs, SGSNs, GGSNs, and other physical devices that comprise functionality found in GERAN, UTRAN, E-UTRAN, and CDMA2000 core networks that are known to persons of ordinary skill in the art. In some embodiments, these one or more interfaces may be multiplexed together on a single physical interface. In some embodiments, lower layers of core network interface 1350 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

OA&M interface 1360 can comprise transmitters, receivers, and other circuitry that enables network node 1300 to communicate with external networks, computers, databases, and the like for purposes of operations, administration, and maintenance of network node 1300 or other network equipment operably connected thereto. Lower layers of OA&M interface 1360 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some embodiments, one or more of radio network interface 1340, core network interface 1350, and OA&M interface 1360 may be multiplexed together on a single physical interface, such as the examples listed above.

Figure 14 is a block diagram of an exemplary network configuration usable to provide over-the-top (OTT) data services between a host computer and a user equipment (UE), according to one or more exemplary embodiments of the present disclosure. UE 1410 can communicate with radio access network (RAN) 1430 over radio interface 1420, which can be based on protocols described above including, *e.g.*, LTE, LTE-A, and 5G/NR. RAN 1430 can include one or more network nodes (*e.g.,* base stations, eNBs, gNBs, controllers, *etc.).* RAN 1430 can further communicate with core network 1440 according to various protocols and interfaces described above. For example, one or more apparatus (*e.g.*, base stations, eNBs, gNBs, *etc.*) comprising RAN 1430 can communicate to core network 1440 via core network interface 1350 described above. In some exemplary embodiments, RAN 1430 and core network 1440 can be configured and/or arranged as shown in other figures discussed above. Similarly, UE 1410 can also be configured and/or arranged as shown in other figures discussed above.

Core network 1440 can further communicate with an external packet data network, illustrated in Figure 14 as Internet 1450, according to various protocols and interfaces known to persons of ordinary skill in the art. Many other devices and/or networks can also connect to and communicate via Internet 1450, such as exemplary host computer 1460. In some exemplary embodiments, host computer 1460 can communicate with UE 1410 using Internet 1450, core network 1440, and RAN 1430 as intermediaries. Host computer 1460 can be a server (*e.g.*, an application server) under ownership and/or control of a service provider. Host computer 1460 can be operated by the OTT service provider or by another entity on the service provider's behalf.

For example, host computer 1460 can provide an over-the-top (OTT) packet data service to UE 1410 using facilities of core network 1440 and RAN 1430, which can be unaware of the routing of an outgoing/incoming communication to/from host computer 1460. Similarly, host computer 1460 can be unaware of routing of a transmission from the host computer to the UE, *e.g.*, the routing of the transmission through RAN 1430. Various OTT services can be provided using the exemplary configuration shown in Figure 14 including, *e.g.*, streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 14 can also include measurement procedures and/or sensors that monitor network performance metrics including data rate, latency and other factors that are improved by exemplary embodiments disclosed herein. The exemplary network can also include functionality for reconfiguring the link between the endpoints (*e.g.*, host computer and UE) in response to variations in the measurement results. Such procedures and functionalities are known and practiced; if the network hides or abstracts the radio interface from the OTT service provider, measurements can be facilitated by proprietary signaling between the UE and the host computer.

The exemplary embodiments described herein provide an efficient techniques to expedite UE contention-based random access (CBRA) with a two-step procedure where appropriate, while avoiding PUSCH intersymbol interference (ISI) in the cell by utilizing a conventional four-step CBRA procedure where the expedited two-step procedure is inappropriate. For example, these techniques can be used by UE 1410 when communicating with a network node (*e.g.,* gNB) comprising RAN 1430. When used in NR UEs (*e.g.,* UE 1410) and gNBs (*e.g.*, gNBs comprising RAN 1430) supporting two-step CBRA procedures, such exemplary embodiments can provide various improvements, benefits, and/or advantages including improved PUSCH detection performance and reduced PUSCH ISI. As such, the improvements, as described herein, can play a critical role by enabling UE 1410 and RAN 1430 to meet the requirements of the particular OTT service between host computer 1460 and UE 1410. These techniques improve data throughput in a coverage area and enable a greater number of users to utilize data-intensive services such as streaming video in various coverage conditions without excessive power consumption or other degradations to user experience.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

The term "network node" used herein can be any kind of network node in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment.

As used herein, a "radio access node" (or "radio network node") can be any node in a radio access network (RAN) that operates to wirelessly transmit and/or receive signals. Some examples of radio access nodes include, but are not limited to, a base station (*e.g.*, aNew Radio (NR) base station (gNB) in a 3GPP Fifth Generation (5G) NR network or an eNB in a 3GPP LTE network), a high-power or macro base station, a low-power base station (*e.g.*, a micro base station, a pico base station, a home eNB, or the like), a relay node, access point (AP), radio AP, remote radio unit (RRU), remote radio head (RRH), a multi-standard BS (e.g., MSR BS), multi-cell/multicast coordination entity (MCE), base transceiver station (BTS), base station controller (BSC), network controller, NodeB (NB), etc. Such terms can also be used to reference to components of a node, such as a gNB-CU and/or a gNB-DU.

As used herein, the term "radio node" can refer to a wireless device (WD) or a radio network node.

As used herein, a "core network node" can be any type of node in a core network. Some examples of a core network node include, *e.g.*, a Mobility Management Entity (MME), a Packet Data Network Gateway (P-GW), a Service Capability Exposure Function (SCEF), Access and Mobility Management Function (AMF), User Plane Function (UPF), Home Subscriber Server (HSS), etc.

As used herein, a "network node" is any node that is part of a radio access network (e.g., a "radio network node" or "radio access node") or a core network (e.g., a "core network node") of a wireless communication system, such as a cellular communications network/system.

In some embodiments, the non-limiting terms "wireless device" (WD) or "user equipment" (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine-to-machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

In some embodiments, the term "slot" is used to indicate a radio resource; however, it should be understood that the techniques described herein may advantageously be used with other types of radio resources, such as any type of physical resource or radio resource expressed in terms of length of time. Examples of time resources are: symbol, time slot, minislot, subframe, radio frame, transmission time interval (TTI), interleaving time, a time resource number, etc.

In some embodiments, a transmitter (e.g., network node) and a receiver (e.g., WD) previously agrees on rule(s) for determining for which resources the transmitter and receiver will arrange one or more physical channels during transmission of the resources, and this rule may, in some embodiments, be referred to as "mapping." In other embodiments, the term "mapping" may have other meanings.

As used herein, a "channel" can be a logical, transport or physical channel. A channel may comprise and/or be arranged on one or more carriers, in particular a plurality of subcarriers. A channel carrying and/or for carrying control signaling/control information may be considered a control channel, in particular if it is a physical layer channel and/or if it carries control plane information. Analogously, a channel carrying and/or for carrying data signaling/user information may be considered a data channel (e.g., PDSCH), in particular if it is a physical layer channel and/or if it carries user plane information. A channel may be defined for a specific communication direction, or for two complementary communication directions (e.g., UL and DL, or sidelink in two directions), in which case it may be considered to have two component channels, one for each direction.

Furthermore, although the term "cell" is used herein, it should be understood that (particularly with respect to 5G NR) beams may be used instead of cells and, as such, concepts described herein apply equally to both cells and beams.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the concepts, principles, and/or embodiments described herein.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

## Claims

1. A method, performed by a user equipment, UE (1200, 1410), for selecting a contention-based random-access, CBRA, procedure for an initial access to a cell served by a network node (1300, 1430) in a wireless communication network, the method comprising:

   determining (830) a value indicative of a current timing advance, TA;
   if the value does not exceed a certain threshold, selecting (840) a first CBRA procedure not involving receiving a TA command prior to transmitting payload data to the cell;
   otherwise selecting (850) a second CBRA procedure invovling receiving a TA command prior to transmitting payload data to the cell; and
   performing (860) the selected CBRA procedure for the initial access to the cell; further comprising:

   receiving (805) an indication, from the network node, of whether selecting the first CBRA procedure is enabled or disabled for the cell; and
   performing the second CBRA procedure based on determining, from the indication, that the selecting of the first CBRA is disabled for the cell.

2. The method of the preceding claim, wherein the first CBRA procedure is a two-step procedure, wherein in a first step, the UE transmits (862, 864) a random access preamble on a physical random access channel, PRACH, and payload data on a physical uplink shared channel, PUSCH, and in a second step, the UE receives (866) a response message including the TA command, and contention resolution information from the network node.

3. The method of any of the preceding claims, wherein the second CBRA procedure is a four-step procedure, wherein in a first step, the UE transmits (862) a random access preamble on a physical random access channel, PRACH, in a second step the UE receives (866) a response message including the TA command from the network node, in a third step, the UE transmits (868) payload data on a physical uplink shared channel, PUSCH, and in a fourth step, the UE receives contention resolution information from the network node.

4. The method of any of the preceding claims, wherein determining the value indicative of the current TA is based on measuring a received power, RSRP, of one or more signals received from the network node.

5. The method of any of the preceding claims, wherein if the first CBRA procedure is selected, performing the selected CBRA procedure further comprises transmitting the payload data on the PUSCH by using a TA value derived from the determined value indicative of the current TA.

6. The method of any of the preceding claims, wherein if the second CBRA procedure is selected, performing the selected CBRA procedure further comprises: transmitting the payload data is transmitted on the PUSCH, using a TA value derived from the TA command.

7. The method of claim 1, wherein the value indicative of the current TA is a parameter related to the distance of the UE to the network node, being determined by:

measuring a received power, RSRP, of one or more signals transmitted by the network node;
adjusting the measured RSRP based on an indication of transmit power used in the cell;
determining the UE position e.g. based on signals transmitted by satellites; and
determining the cell site position based on information stored by the UE or broadcasted by the network node.

8. The method of claim 1, wherein the value indicative of the current TA is a parameter related to the movement of the UE relative to a position since an estimated TA value known to be valid, wherein the parameter is determined based on one or more of the following:

detecting a change in the UE's observed timing of one or more signals transmitted by the network node;
estimating the amount of Doppler frequency shift present in one or more signals transmitted by the network node;
detecting a change in one or more observed time differences, OTDs, wherein each OTD is between signals associated with a pair of cells; and
detecting a change in the UE position e.g. based on signals transmitted by satellites.

9. The method of any of claims 1-8, wherein the certain threshold is based on one of more of the following:

system information, SI, for the cell, broadcasted by the network node;
dedicated radio resource control, RRC, signalling between the network node and the UE; and
UE performance requirements.

10. The method of any of claims 1-9, wherein selecting the first CBRA procedure or the second CBRA procedure is further based on information about a load of cell random-access, RA, resources.

11. The method of claim 1, wherein the value indicative of the current timing advance, TA corresponds to a previous movement of the UE, and wherein the certain threshold is zero, so that the UE selects the first CBRA only when the UE does not detect a previous movement.

12. A method performed by a network node (1300, 1430) in a wireless communication network, for supporting selectable contention-based random-access, CBRA, procedures for a user equipment, UE, initial access to a cell served by the network node, the method comprising:

transmitting (910), in the cell, configuration information including a threshold for UE-based CBRA procedure selection, to determine at the UE, if a value indicative of a current timing advance, TA does not exceed the threshold;
if so, performing (920) a first CBRA procedure not involving sending a TA command prior to receiving payload data;
otherwise performing (920) a second CBRA procedure invovling sending a TA command prior to receiving payload data;
wherein the configuration information further comprises an indication of whether UE-based CBRA procedure selection is enabled or disabled within the cell;
wherein if the configuration information indicates that UE-based CBRA procedure selection is disabled, performing the second CBRA procedure involving transmitting a TA command prior to receiving payload data from the UE.

13. The method of claim 12, wherein performing the CBRA procedure further comprises:

determining (924) that payload data was not received on a physical uplink shared channel, PUSCH, substantially concurrently with a RA preamble on a physical random access channel, PRACH; and
in response to determining that the payload data was not received, performing the following operations:

determining (925) a timing advance, TA, command for the UE based on the received RA preamble;
sending (926), to the UE, a response including the TA command; and
receiving (927), from the UE, the payload data on the PUSCH, where the payload data is time-aligned according to the TA command.

**14.** A user equipment, UE (1200, 1410), being arranged to perform operations corresponding to any of the methods of claims 1-11.

**15.** A network node (1300, 1410), for a wireless network, , the network node being arranged to perform operations corresponding to any of the methods of claims 12-13.


**Patentansprüche**

**1.** Verfahren, das von einer Benutzereinrichtung, UE, (1200, 1410) durchgeführt wird, zur Auswahl einer konfliktbasierten Direktzugriffs-,CBRA-,Prozedur für einen anfänglichen Zugriff auf eine Zelle, die von einem Netzwerkknoten (1300, 1430) in einem Drahtloskommunikationsnetzwerk bedient wird, wobei das Verfahren umfasst:

Bestimmen (830) eines Wertes, der eine aktuelle Zeitvorstellung, TA, anzeigt;
Auswählen (840) einer ersten CBRA-Prozedur, die kein Empfangen eines TA-Befehls vor dem Senden von Nutzlastdaten an die Zelle umfasst, wenn der Wert eine bestimmte Schwelle nicht überschreitet, andernfalls Auswählen (850) einer zweiten CBRA-Prozedur, die ein Empfangen eines TA-Befehls vor dem Senden von Nutzlastdaten an die Zelle umfasst; und
Durchführen (860) der ausgewählten CBRA-Prozedur für den anfänglichen Zugriff auf die Zelle;
ferner umfassend:

Empfangen (805) einer Anzeige dessen, ob Auswählen der ersten CBRA-Prozedur für die Zelle aktiviert oder deaktiviert ist, vom Netzwerkknoten;
Durchführen der zweiten CBRA-Prozedur basierend auf dem Bestimmen aus der Anzeige, dass das Auswählen der ersten CBRA für die Zelle deaktiviert ist.

**2.** Verfahren nach dem vorhergehenden Anspruch, wobei die CBRA-Prozedur eine Prozedur in zwei Schritten ist, wobei in einem ersten Schritt die UE eine Direktzugriffspräambel auf einem physikalischen Direktzugriffskanal, PRACH, und Nutzlastdaten auf einen gemeinsamen physikalischen Uplink-Kanal, PUSCH, sendet (862, 864) und in einem zweiten Schritt die UE eine Antwortnachricht (866), die den TA-Befehl umfasst, und Konfliktauflösungsinformationen vom Netzwerkknoten empfängt.

**3.** Verfahren nach einem der vorhergehenden Ansprüche, wobei die zweite CBRA-Prozedur eine Prozedur in vier Schritten ist, wobei im ersten Schritt die UE (862) eine Direktzugriffspräambel auf einem physikalischen Direktzugriffskanal, PRACH, sendet (862), in einem zweiten Schritt die UE eine Antwortnachricht, die den TA-Befehl umfasst, vom Netzwerkknoten empfängt (866), in einem dritten Schritt die UE Nutzlastdaten auf einem gemeinsamen physikalischen Uplink-Kanal, PUSCH, sendet (868) und in einem vierten Schritt die UE Konfliktauflösungsinformationen vom Netzwerkknoten empfängt.

**4.** Verfahren nach einem der vorhergehenden Ansprüche, wobei das Bestimmen des Wertes, der die aktuelle TA anzeigt, auf einem Messen einer Empfangsleistung, RSRP, eines oder mehrerer Signale basiert, die vom Netzwerkknoten empfangen werden.

**5.** Verfahren nach einem der vorhergehenden Ansprüche, wobei, wenn die erste CBRA-Prozedur ausgewählt wird, das Durchführen der ausgewählten CBRA-Prozedur ferner ein Senden der Nutzlastdaten auf dem PUSCH durch Verwenden eines TA-Wertes umfasst, der vom bestimmten Wert abgeleitet ist, der den aktuellen TA anzeigt.

**6.** Verfahren nach einem der vorhergehenden Ansprüche, wobei, wenn die zweite CBRA-Prozedur ausgewählt wird, das Durchführen der ausgewählten CBRA-Prozedur ferner umfasst, dass: das Senden der Nutzlastdaten auf dem PUSCH unter Verwendung eines vom TA-Befehl abgeleiteten TA-Wertes erfolgt.

**7.** Verfahren nach Anspruch 1, wobei der Wert, der den aktuellen TA anzeigt, ein Parameter in Bezug auf die Entfernung der UE zum Netzwerkknoten ist, der bestimmt wird durch:

Messen einer Empfangsleistung, RSRP, eines oder mehrerer Signale, die vom Netzwerkknoten gesendet werden;
Anpassen der gemessenen RSRP basierend auf einer Anzeige einer Sendeleistung, die in der Zelle verwendet wird;

Bestimmen der UE-Position z. B. basierend auf Signalen, die durch Satelliten gesendet werden; und
Bestimmen der Zellenstandortposition basierend auf Informationen, die durch die UE gespeichert oder vom Netzwerkknoten per Broadcast gesendet werden.

8. Verfahren nach Anspruch 1, wobei der Wert, der den aktuellen TA-Befehl anzeigt, ein Parameter ist, der sich auf die Bewegung der UE relativ zu einer Position bezieht, da ein geschätzter TA-Wert als gültig bekannt ist, wobei der Parameter basierend auf einem oder mehrerem von Folgendem bestimmt wird:

Erkennen einer Änderung der beobachteten UE-Zeitvorgabe eines oder mehrerer Signale, die vom Netzwerkknoten gesendet werden;
Schätzen des Betrags einer Doppler-Frequenzverschiebung, die in einem oder mehreren Signalen vorliegt, die vom Netzwerkknoten gesendet werden;
Erkennen einer Änderung eines oder mehrerer beobachteter Zeitunterschiede, OTDs, wobei jeder OTD zwischen Signalen mit einem Paar von Zellen assoziiert ist; und
Erkennen einer Änderung der UE-Position z. B. basierend auf Signalen, die durch Satelliten gesendet werden.

9. Verfahren nach einem der Ansprüche 1 bis 8, wobei die bestimmte Schwelle auf einem oder mehreren von Folgenden basiert:

Systeminformationen, SI, für die Zelle, die vom Netzwerkknoten per Broadcast gesendet werden;
dedizierter Funkressourcensteuerungs-,RRC-,Signalisierung zwischen dem Netzwerkknoten und der UE; und
UE-Leistungsanforderungen.

10. Verfahren nach einem der Ansprüche 1 bis 9, wobei das Auswählen der ersten CBRA-Prozedur oder der zweiten CBRA-Prozedur ferner auf Informationen über eine Last von Direktzugriffs-,RA-,Ressourcen der Zelle basiert.

11. Verfahren nach Anspruch 1, wobei der Wert, der die aktuelle Zeitvorstellung, TA, angibt, einer vorherigen Bewegung der UE entspricht, und wobei die bestimmte Schwelle null ist, so dass die UE die erste CBRA nur dann auswählt, wenn die UE keine vorherige Bewegung erkennt.

12. Verfahren, das von einem Netzwerkknoten (1300, 1430) in einem Drahtloskommunikationsnetzwerk durchgeführt wird, zur Unterstützung einer konfliktbasierten Direktzugriffs-,CBRA-,Prozedur für einen anfänglichen Zugriff auf eine Zelle, die vom Netzwerkknoten bedient wird, durch eine Benutzereinrichtung, UE, wobei das Verfahren umfasst:

Senden (910) von Konfigurationsinformationen, die eine Schwelle für UE-basierte Auswahl einer CBRA-Prozedur umfassen, in der Zelle, um an der UE zu bestimmen, ob ein Wert, der eine aktuelle Zeitvorstellung, TA, anzeigt, die Schwelle nicht überschreitet;
Durchführen (920), wenn dies der Fall ist, einer ersten CBRA-Prozedur, die kein Senden eines TA-Befehls vor dem Empfangen von Nutzlastdaten umfasst;
andernfalls Durchführen (920) einer zweiten CBRA-Prozedur, die ein Senden eines TA-Befehls vor dem Empfangen von Nutzlastdaten umfasst;
wobei die Konfigurationsinformationen ferner eine Anzeige dessen umfassen, ob UE-basierte Auswahl einer CBRA-Prozedur innerhalb der Zelle aktiviert oder deaktiviert ist;
wobei, wenn die Konfigurationsinformationen anzeigen, dass UE-basierte Auswahl einer CBRA-Prozedur deaktiviert ist, die zweite CBRA-Prozedur durchgeführt wird, die ein Senden eines TA-Befehls vor dem Empfangen von Nutzlastdaten von der UE umfasst.

13. Verfahren nach Anspruch 12, wobei das Durchführen der CBRA-Prozedur ferner umfasst:

Bestimmen (924), dass Nutzlastdaten auf einem gemeinsamen physikalischen Uplink-Kanal, PUSCH, nicht im Wesentlichen gleichzeitig mit einer RA-Präambel auf einem physikalischen Direktzugriffskanal, PRACH, empfangen wurden;
Durchführen der folgenden Operationen in Reaktion auf ein Bestimmen, dass die Nutzlastdaten nicht empfangen wurden:

Bestimmen (925) eines Zeitvorstellungs-,TA-,Befehls für die UE basierend auf der empfangenen RA-Präambel;
Senden (926) einer Antwort, die den TA-Befehl umfasst, an die UE; und

Empfangen (927) der Nutzlastdaten von der UE auf dem PUSCH, wobei die Nutzlastdaten gemäß dem TA-Befehl zeitlich abgestimmt sind.

14. Benutzereinrichtung, UE, (1200, 1410), die zum Durchführen von Operationen ausgelegt ist, die einem der Verfahren nach Anspruch 1 bis 11 entsprechen.

15. Netzwerkknoten (1300, 1410) für ein Drahtlosnetzwerk, wobei der Netzwerkknoten zum Durchführen von Operationen ausgelegt ist, die einem der Verfahren nach Anspruch 12 bis 13 entsprechen.

**Revendications**

1. Procédé, réalisé par un équipement utilisateur, UE (1200, 1410), pour sélectionner une procédure d'accès aléatoire basé sur contention, CBRA, pour un accès initial à une cellule desservie par un noeud de réseau (1300, 1430) dans un réseau de communication sans fil, le procédé comprenant :

la détermination (830) d'une valeur indicative d'une avance de synchronisation, TA, courante ;
si la valeur ne dépasse pas un certain seuil, la sélection (840) d'une première procédure CBRA n'impliquant pas la réception d'une instruction de TA avant la transmission de données de charge utile à la cellule ;
sinon, la sélection (850) d'une deuxième procédure CBRA impliquant la réception d'une instruction de TA avant la transmission de données de charge utile à la cellule ; et
la réalisation (860) de la procédure CBRA sélectionnée pour l'accès initial à la cellule ;
comprenant en outre :

la réception (805) d'une indication, depuis le noeud de réseau, indiquant si la sélection de la première procédure CBRA est activée ou désactivée pour la cellule ; et
la réalisation de la deuxième procédure CBRA sur la base de la détermination, d'après l'indication, que la sélection de la première procédure CBRA est désactivée pour la cellule.

2. Procédé selon la revendication précédente, dans lequel la première procédure CBRA est une procédure en deux étapes, dans lequel, à une première étape, l'UE transmet (862, 864) un préambule d'accès aléatoire sur un canal d'accès aléatoire physique, PRACH, et des données de charge utile sur un canal partagé de liaison montante physique, PUSCH, et, à une deuxième étape, l'UE reçoit (866) un message de réponse incluant l'instruction de TA, et des informations de résolution de contention depuis le noeud de réseau.

3. Procédé selon l'une quelconque des revendications précédentes, dans lequel la deuxième procédure CBRA est une procédure en quatre étapes, dans lequel, à une première étape, l'UE transmet (862) un préambule d'accès aléatoire sur un canal d'accès aléatoire physique, PRACH ; à une deuxième étape, l'UE reçoit (866) un message de réponse incluant l'instruction de TA depuis le noeud de réseau ; à une troisième étape, l'UE transmet (868) des données de charge utile sur un canal partagé de liaison montante physique, PUSCH ; et, à une quatrième étape, l'UE reçoit des informations de résolution de contention depuis le noeud de réseau.

4. Procédé selon l'une quelconque des revendications précédentes, dans lequel la détermination de la valeur indicative de la TA courante est basée sur la mesure d'une puissance reçue, RSRP, d'un ou plusieurs signaux reçus depuis le noeud de réseau.

5. Procédé selon l'une quelconque des revendications précédentes, dans lequel, si la première procédure CBRA est sélectionnée, la réalisation de la procédure CBRA sélectionnée comprend en outre la transmission des données de charge utile sur le PUSCH par l'utilisation d'une valeur de TA dérivée de la valeur déterminée indicative de la TA courante.

6. Procédé selon l'une quelconque des revendications précédentes, dans lequel, si la deuxième procédure CBRA est sélectionnée, la réalisation de la procédure CBRA sélectionnée comprend en outre : la transmission des données de charge utile sur le PUSCH en utilisant une valeur de TA dérivée de l'instruction de TA.

7. Procédé selon la revendication 1, dans lequel la valeur indicative de la TA courante est un paramètre lié à la distance de l'UE au noeud de réseau, qui est déterminée par :

la mesure d'une puissance reçue, RSRP, d'un ou plusieurs signaux transmis par le noeud de réseau ;

l'ajustement de la RSRP mesurée sur la base d'une indication d'une puissance de transmission utilisée dans la cellule. ;

la détermination de la position de l'UE, par exemple sur la base de signaux transmis par des satellites ; et

la détermination de la position de site de cellule sur la base d'informations stockées par l'UE ou diffusées par le noeud de réseau.

8. Procédé selon la revendication 1, dans lequel la valeur indicative de la TA courante est un paramètre lié au déplacement de l'UE par rapport à une position depuis une valeur de TA estimée connue comme étant correcte, dans lequel le paramètre est déterminé sur la base d'une ou plusieurs parmi ce qui suit :

la détection d'un changement de la synchronisation observée par l'UE d'un ou plusieurs signaux transmis par le noeud de réseau ;

l'estimation de la quantité de décalage de fréquence Doppler présent dans un ou plusieurs signaux transmis par le noeud de réseau ;

la détection d'un changement d'une ou plusieurs différences de temps observées, OTD, dans lequel chaque OTD est entre des signaux associés à une paire de cellules ; et

la détection d'un changement de la position de l'UE, par exemple sur la base de signaux transmis par des satellites.

9. Procédé selon l'une quelconque des revendications 1 à 8, dans lequel le certain seuil est basé sur une ou plusieurs parmi ce qui suit :

des informations système, SI, pour la cellule, diffusées par le noeud de réseau ;

une signalisation de commande de ressources radio, RRC, dédiée entre le noeud de réseau et l'UE ; et

des exigences de performance d'UE.

10. Procédé selon l'une quelconque des revendications 1 à 9, dans lequel la sélection de la première procédure CBRA ou de la deuxième procédure CBRA est en outre basée sur des informations relatives à une charge de ressources d'accès aléatoire, RA, de cellule.

11. Procédé selon la revendication 1, dans lequel la valeur indicative de l'avance de synchronisation, TA, courante correspond à un déplacement précédent de l'UE, et dans lequel le certain seuil est zéro, de sorte que l'UE sélectionne la première procédure CBRA uniquement lorsque l'UE ne détecte pas de déplacement précédent.

12. Procédé, réalisé par un noeud de réseau (1300, 1430) dans un réseau de communication sans fil, pour prendre en charge des procédures d'accès aléatoire basé sur contention, CBRA, sélectionnables pour un accès initial d'un équipement utilisateur, UE, à une cellule desservie par le noeud de réseau, le procédé comprenant :

la transmission (910), dans la cellule, d'informations de configuration incluant un seuil pour une sélection de procédure CBRA basée sur UE pour déterminer, au niveau de l'UE, si une valeur indicative d'une avance de synchronisation, TA, courante ne dépasse pas le seuil,

si tel est le cas, la réalisation (920) d'une première procédure CBRA n'impliquant pas l'envoi d'une instruction de TA avant la réception de données de charge utile ;

sinon, la réalisation (920) d'une deuxième procédure CBRA impliquant l'envoi d'une instruction de TA avant la réception de données de charge utile ;

dans lequel les informations de configuration comprennent en outre une indication indiquant si la sélection de procédure CBRA sur la base de l'UE est activée ou désactivée à l'intérieur de la cellule ;

dans lequel, si les informations de configuration indiquent que la sélection de procédure CBRA sur la base de l'UE est désactivée, la réalisation de la deuxième procédure CBRA impliquant la transmission d'une instruction de TA avant la réception de données de charge utile depuis l'UE.

13. Procédé selon la revendication 12, dans lequel la réalisation de la procédure CBRA comprend en outre :

la détermination (924) que des données de charge utile n'ont pas été reçues sur un canal partagé de liaison montante physique, PUSCH, sensiblement simultanément avec un préambule de RA sur un canal d'accès aléatoire physique, PRACH ; et

en réponse à la détermination que les données de charge utile n'ont pas été reçues, la réalisation des opérations suivantes :

la détermination (925) d'une instruction d'avance de synchronisation, TA, pour l'UE sur la base du préambule de RA reçu ;
l'envoi (926), à l'UE, d'une réponse incluant l'instruction de TA ; et
la réception (927), depuis l'UE, des données de charge utile sur le PUSCH, dans lequel les données de charge utile sont alignées dans le temps selon l'instruction de TA.

14. Equipement utilisateur, UE (1200, 1410), étant agencé pour réaliser des opérations correspondant à l'un quelconque des procédés selon les revendications 1 à 11.

15. Noeud de réseau (1300, 1410) pour un réseau sans fil, le noeud de réseau étant agencé pour réaliser des opérations correspondant à l'un quelconque des procédés selon la revendication 12 ou 13.

## FIG. 1A

```
┌─ ─ ─ ─ ─ ─ ─ ─ ┐   ┌─ ─ ─ ─ ─ ─ ─ ─ ┐   ┌─ ─ ─ ─ ─ ─ ─ ─ ┐
│ UE             │   │ eNB            │   │ MME            │
│   ┌────────┐   │   │                │   │   ┌────────┐   │
│   │  NAS   │◄──┼───┼────────────────┼───┼──►│  NAS   │   │
│   └────────┘   │   │                │   │   └────────┘   │
│   ┌────────┐   │   │   ┌────────┐   │   │                │
│   │  RRC   │◄──┼───┼──►│  RRC   │   │   │                │
│   └────────┘   │   │   └────────┘   │   │                │
│   ┌────────┐   │   │   ┌────────┐   │   │                │
│   │  PDCP  │◄──┼───┼──►│  PDCP  │   │   │                │
│   └────────┘   │   │   └────────┘   │   │                │
│   ┌────────┐   │   │   ┌────────┐   │   │                │
│   │  RLC   │◄──┼───┼──►│  RLC   │   │   │                │
│   └────────┘   │   │   └────────┘   │   │                │
│   ┌────────┐   │   │   ┌────────┐   │   │                │
│   │  MAC   │◄──┼───┼──►│  MAC   │   │   │                │
│   └────────┘   │   │   └────────┘   │   │                │
│   ┌────────┐   │   │   ┌────────┐   │   │                │
│   │  PHY   │◄──┼───┼──►│  PHY   │   │   │                │
│   └────────┘   │   │   └────────┘   │   │                │
└─ ─ ─ ─ ─ ─ ─ ─ ┘   └─ ─ ─ ─ ─ ─ ─ ─ ┘   └─ ─ ─ ─ ─ ─ ─ ─ ┘
```

## FIG. 1B

Layer 3 — Radio Resource Control (RRC)

Layer 2 — Logical channels — Medium Access Control — Transport channels

Layer 1 — Physical layer

Control/ Measurements

# FIG. 2A

UE                                    eNB

Random Access Preamble ("Msg1")

Random Access Response ("Msg2")

Scheduled Transmission ("Msg3")

Contention Resolution ("Msg4")

# FIG. 2B

UE                                    eNB

Preamble assignment ("Msg0")

Random Access Preamble ("Msg1")

Random Access Response ("Msg2")

# FIG. 3

OFDM symbol #

Resource Element

Resource block

a 14- symbol slot

one slot

Subcarriers

system bandwidth

Frequency

Time

# FIG. 4A

Symbol $T_{symb}$

Slot $T_S$

# FIG. 4B

One slot (14 symbols)

▨ PDSCH/ PUSCH (data)   ▧ Control (PDCCH), possibly data

# FIG. 5

UE

gNB(s)

SS-block: NR-PSS NR- SSS, NR-PBCH

Broadcasted system information (RMSI, OSI)

NR-PRACH (Physical Random Access Channel)

NR-RAR (Random Access Response)

NR-PUSCH (Physical Uplink Shared Channel)

CRM (Contentation Resolution Message)

## FIG. 6

| | | | |
|---|---|---|---|
| R | Timing Advance Command | | Oct1 |
| Timing Advance Command | | UL Grant | Oct2 |
| UL Grant | | | Oct3 |
| UL Grant | | | Oct4 |
| UL Grant | | | Oct5 |
| Temporary C-RNTI | | | Oct6 |
| Temporary C-RNTI | | | Oct7 |

## FIG. 7

UE                                                                    gNB(s)

SS-block: NR-PSS NR- SSS, NR-PBCH

Broadcasted system information (RMSI, OSI)

MsgA: Preamble

MsgA: PUDCH

MsgB

# FIG. 8

800

Receiving an indication, from the network node, of whether CBRA procedure selection is enabled or disabled for the cell.
— 805

Determining a parameter related to the distance from the UE to the network node.
— 810

Determining a parameter related to the movement of the UE since an estimated TA value was last known to be valid.
— 820

Determining a threshold for CBRA procedure selection.
— 825

Determining whether at least one of the following parameters is less than a corresponding threshold:
a parameter related to movement of the UE since an estimated timing advance (TA) value was last known to be valid, and
a parameter related to the distance from the UE to the network node.
— 830

Based on determining that at least one of the parameters is less than the corresponding threshold, selecting a first CBRA procedure.
— 840

Based on determining that at least one of the parameters is less than the corresponding threshold, selecting a second CBRA procedure.
— 850

860

Performing the selected CBRA procedure for initial access to the cell.

Transmitting RA preamble on physical random access channel (PRACH).
— 862

Transmitting additional information on a physical uplink shared channel (PUSCH) substantially concurrently with the preamble on the PRACH.
— 864

Receiving, from the network node, a response to the RA preamble, the response including a TA command.
— 866

Transmitting additional information on a physical uplink shared channel (PUSCH) using a TA value derived from the TA command.
— 868

# FIG. 9

900

| Transmitting, in the cell, configuration information including one or more of: an indication of whether UE-based CBRA procedure selection is enabled or disabled within the cell, one or more thresholds UE-based CBRA procedure selection, and information about loading of cell random-access (RA) resources. | 910 |

920

Performing a CBRA procedure with a particular UE based on the configuration.

Receiving a RA premable on physical random access channel (PRACH). — 921

Receiving, from the UE substantially concurrently with the preamble on the PRACH, additional information on a physical uplink shared channel (PUSCH). — 922

Monitoring a PUSCH for additional information transmitted by the UE substantially concurrently with the RA preamble on the PRACH. — 923

Determining that the additional information was not received on the PUSCH substantially concurrently with the RA preamble. — 924

Determining a timing advance (TA) command for the UE based on the received RA preamble. — 925

Sending, to the UE, a response including the TA command. — 926

Receiving, from the UE, the additional information on the PUSCH, where the received additional information is time-aligned according to the TA command. — 927

# FIG. 10

# FIG. 11

AMF/UPF 1130a/1140a
AMF/UPF 1130b/1140b
1198
5GC

NG

1199
NG-RAN

gNB 1110a
gNB 1110b
ng-eNB
ng-eNB
Xn
1120a
1120b

# FIG. 12

1200

1210 Processor
1221 — 1220 Program memory
1230 Data memory
1270 Bus

1240 Transceiver
1250 User Interface
1260 Control Interface

## FIG. 13

1310      1320      1330      1300

| Processor | 1321 Program memory | Data memory |

1370

Bus

| Radio Network Interface | Core Network Interface | OA&M Interface |

1340      1350      1360

## FIG. 14

1410 1420 1430 1440 1450 1460

UE — Radio Access Network ↔ Core Network ↔ Internet ↔ Host Computer

**EP 3 949 651 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018064372 A1